# EUROPEAN PATENT APPLICATION

(11) **EP 4 404 670 A1**
(43) Date of publication of application: **24.07.2024**
(21) Application number: 22868959.2
(22) Date of filing: 19.08.2022
(51) Int. Cl.: H04W 72/12

(54) **DATA TRANSMISSION METHOD AND APPARATUS, AND STORAGE MEDIUM**

(30) Priority: 16.09.2021 CN 202111088653
(71) Applicant: Datang Mobile Communications Equipment Co., Ltd., Beijing 100085 (CN)
(72) Inventor: CHEN, Li, Beijing 100085 (CN)
(74) Representative: Studio Torta S.p.A.
(86) International application number: PCT/CN2022/113765
(87) International publication number: WO 2023/040585

(57) **Abstract**

The present application provides a data transmission method, an apparatus, and a storage medium, applied to a terminal or a network device. The data transmission method includes: determining, at a user plane air interface protocol layer, a plurality of IP packets belonging to a same data frame; if a quantity of an IP packet with transmission error in the plurality of IP packets is greater than or equal to a quantity threshold, at the user plane air interface protocol layer, stopping a transmission of a remaining IP packet in the plurality of IP packets, or lowering a transmission priority of the remaining IP packet to prioritize a transmission of other data frames on a QoS flow where the data frame is located or prioritize a transmission of a data frame on other QoS flows. Therefore, in a case that the IP packet transmission error in the data frame may affect correct parsing of the data frame, a data transmission delay of the same QoS flow or other QoS flows caused by the remaining IP packet continuing to occupy the air interface resource is avoided, thereby improving the efficiency of air interface resources.

## Description

The present disclosure claims priority to Chinese patent application No. 202111088653.6, filed to China National Intellectual Property Administration on September 16, 2021 and entitled "DATA TRANSMISSION METHOD, APPARATUS, AND STORAGE MEDIUM", which is hereby incorporated by reference in its entirety.

### TECHNICAL FIELD

The present disclosure relates to the field of communication and, in particular, to a data transmission method, an apparatus, and a storage medium.

### BACKGROUND

In a communication system, some services have requirements for low latency, high throughput, and high reliability, such as an extended reality (eXtended Reality, XR) and a cloud game (Cloud Game, CG), which are one of the most important 5G media applications. Such type of service requires a transmission of large data in a short duration, and its burst throughput in a short duration may be much higher than an average throughput, for which ensuring high reliability is also required.

In the above services, there are services modeled by frame level packet, such as the XR service. In the services modeled by frame level packet, one data packet corresponds to one data frame, and each IP packet of multiple IP packets obtained from segmentation of one data frame is independently transmitted on an air interface, and a data frame is parsed by an opposite end after all IP packets in the data frame are transmitted.

However, in a case that a data frame cannot be correctly parsed due to an IP packet transmission error in the data frame, the above transmission process has a problem of low efficiency of air interface resource.

### SUMMARY

The present disclosure provides a data transmission method, an apparatus, and a storage medium for solving the problem of low efficiency of air interface resource when the data frame cannot be correctly parsed due to IP packet transmission error in the data frame.

In a first aspect, the present disclosure provides a data transmission method, where the method is applied to a terminal, and the method includes: determining, at a user plane air interface protocol layer, a plurality of IP packets belonging to a same data frame; if a quantity of an IP packet with transmission error in the plurality of IP packets is greater than or equal to a quantity threshold, at the user plane air interface protocol layer, stopping a transmission of a remaining IP packet in the plurality of IP packets, or lowering a transmission priority of the remaining IP packet to prioritize a transmission of other data frames on a QoS flow where the data frame is located or prioritize a transmission of a data frame on other QoS flows.

In some optional implementations, the user plane air interface protocol layer is a PDCP layer;
at the user plane air interface protocol layer, stopping the transmission of the remaining IP packet in the plurality of IP packets includes: discarding, on a PDCP entity carrying the remaining IP packet, a PDCP SDU including the remaining IP packet;
at the user plane air interface protocol layer, lowering the transmission priority of the remaining IP packet includes: adjusting, on the PDCP entity carrying the remaining IP packet, the PDCP SDU including the remaining IP packet such that the PDCP SDU including the remaining IP packet is to be transmitted after other PDCP SDUs.

In some optional implementations, before stopping the transmission of the remaining IP packet in the plurality of IP packets, or lowering the transmission priority of the remaining IP packet, the data transmission method further includes: at the PDCP layer, determining the IP packet with transmission error in the plurality of IP packets based on an ARQ of a radio link control RLC layer and/or a HARQ.

In some optional implementations, determining, at the user plane air interface protocol layer, the plurality of IP packets belonging to the same data frame includes at least one of the following:
for a data frame belonging to a periodic service, if there is, in a service period, only one data frame for the periodic service, determining IP packets included in all PDCP SDUs within a same service period as the plurality of IP packets belonging to the same data frame; or,
among IP packets included in multiple PDCP SDUs, determining IP packets carrying a same data frame label as the plurality of IP packets belonging to the same data frame; or,
among IP packets included in multiple PDCP SDUs, determining the plurality of IP packets belonging to the same data frame by performing deep packet parsing of the IP packets; or,
among IP packets included in multiple PDCP SDUs, determining IP packets included in PDCP SDUs carrying a same group identifier as the plurality of IP packets belonging to the same data frame, where a group identifier carried by a PDCP SDU is from an SDAP layer.

In some optional implementations, the user plane air interface protocol layer is a MAC;
at the user plane air interface protocol layer, stopping the transmission of the remaining IP packet in the plurality of IP packets includes: discarding an RLC PDU including the remaining IP packet in a received RLC PDU;
at the user plane air interface protocol layer, lowering the transmission priority of the remaining IP packet includes: lowering a priority of a logical channel corresponding to a DRB entity that carries the remaining IP packet, to prioritize a data transmission of other logical channels.

In some optional implementations, before stopping the transmission of the remaining IP packet in the plurality of IP packets, or lowering the transmission priority of the remaining IP packet, the data transmission method further includes: at the MAC layer, determining the IP packet with transmission error in the plurality of IP packets based on a HARQ of a physical layer and/or feedback information indicating that a retransmission is still unsuccessful.

In some optional implementations, determining, at the user plane air interface protocol layer, the plurality of IP packets belonging to the same data frame includes at least one of the following:
among IP packets included in multiple MAC SDUs, determining IP packets included in MAC SDUs carrying a same group identifier as the plurality of IP packets belonging to the same data frame, where a group identifier carried by a MAC SDU is from an SDAP layer, a PDCP layer, or an RLC layer; or,
among IP packets included in multiple MAC SDUs, determining IP packets transmitted on a same sub logical channel as the plurality of IP packets belonging to the same data frame, where in an RLC layer, PDCP PDUs including IP packets of different data frames are mapped to different sub logical channels, and PDCP PDUs including IP packets of a same data frame are mapped to a same sub logical channel.

In some optional implementations, the quantity threshold is equal to 1, or the quantity threshold is pre-configured by a network device for the terminal for each DRB or each QoS flow, or the quantity threshold is specified by a protocol.

In some optional implementations, the data transmission method further includes: receiving configuration information from a network device, where the configuration information includes at least one of the following: whether to allow stopping a transmission of an IP packet at the user plane air interface protocol layer, or whether to allow lowering a transmission priority of an IP packet at the user plane air interface protocol layer, or a manner of determining an IP packet transmission error, or the quantity threshold.

In a second aspect, the present disclosure provides a data transmission method, where the method is applied to a network device, and the method includes: determining, at a user plane air interface protocol layer, a plurality of IP packets belonging to a same data frame; if a quantity of an IP packet with transmission error in the plurality of IP packets is greater than or equal to a quantity threshold, at the user plane air interface protocol layer, stopping a transmission of a remaining IP packet in the plurality of IP packets, or lowering a transmission priority of the remaining IP packet to prioritize a transmission of other data frames on a QoS flow where the data frame is located or prioritize a transmission of a data frame on other QoS flows.

In some optional implementations, the user plane air interface protocol layer is a PDCP layer;
at the user plane air interface protocol layer, stopping the transmission of the remaining IP packet in the plurality of IP packets includes: discarding, on a PDCP entity carrying the remaining IP packet, a PDCP SDU including the remaining IP packet;
at the user plane air interface protocol layer, lowering the transmission priority of the remaining IP packet includes: adjusting, on the PDCP entity carrying the remaining IP packet, the PDCP SDU including the remaining IP packet such that the PDCP SDU including the remaining IP packet is to be transmitted after other PDCP SDUs.

In some optional implementations, before stopping the transmission of the remaining IP packet in the plurality of IP packets, or lowering the transmission priority of the remaining IP packet, the data transmission method further includes: at the PDCP layer, determining the IP packet with transmission error in the plurality of IP packets based on an ARQ of an RLC layer and/or a HARQ of a physical layer.

In some optional implementations, determining, at the user plane air interface protocol layer, the plurality of IP packets belonging to the same data frame includes at least one of the following:
for a data frame belonging to a periodic service, if there is, in a service period, only one data frame for the periodic service, determining IP packets included in all PDCP SDUs within a same service period as the plurality of IP packets belonging to the same data frame; or,
among IP packets included in multiple PDCP SDUs, determining IP packets carrying a same data frame label as the plurality of IP packets belonging to the same data frame; or,
among IP packets included in multiple PDCP SDUs, determining the plurality of IP packets belonging to the same data frame by performing deep packet parsing of the IP packets; or,
among IP packets included in multiple PDCP SDUs, determining IP packets included in PDCP SDUs carrying a same group identifier as the plurality of IP packets belonging to the same data frame, where a group identifier carried by a PDCP SDU is from an SDAP layer.

In some optional implementations, the user plane air interface protocol layer is a MAC;
at the user plane air interface protocol layer, stopping the transmission of the remaining IP packet in the plurality of IP packets includes: discarding an RLC PDU including the remaining IP packet in a received RLC PDU;
at the user plane air interface protocol layer, lowering the transmission priority of the remaining IP packet includes: lowering a priority of a logical channel corresponding to a DRB entity that carries the remaining IP packet, to prioritize a data transmission of other logical channels.

In some optional implementations, before stopping the transmission of the remaining IP packet in the plurality of IP packets, or lowering the transmission priority of the remaining IP packet, the data transmission method further includes: at the MAC layer, determining the IP packet with transmission error in the plurality of IP packets based on a HARQ of a physical layer and/or feedback information indicating that a retransmission is still unsuccessful.

In some optional implementations, determining, at the user plane air interface protocol layer, the plurality of IP packets belonging to the same data frame includes at least one of the following: among IP packets included in multiple MAC SDUs, determining IP packets included in MAC SDUs carrying a same group identifier as the plurality of IP packets belonging to the same data frame, where a group identifier carried by a MAC SDU is from an SDAP layer, a PDCP layer, or an RLC layer; or,
among IP packets included in multiple MAC SDUs, determining IP packets transmitted on a same sub logical channel as the plurality of IP packets belonging to the same data frame, where in an RLC layer, PDCP PDUs including IP packets of different data frames are mapped to different sub logical channels, and PDCP PDUs including IP packets of a same data frame are mapped to a same sub logical channel.

In some optional implementations, the quantity threshold is equal to 1, or the quantity threshold is pre-configured by the network device for each DRB or each QoS flow, or the quantity threshold is specified by a protocol.

In some optional implementations, the data transmission method further includes: sending configuration information to a terminal, where the configuration information includes at least one of the following: whether to allow stopping a transmission of an IP packet at the user plane air interface protocol layer, or whether to allow lowering a transmission priority of an IP packet at the user plane air interface protocol layer, or a manner of determining an IP packet transmission error, or the quantity threshold.

In a third aspect, the present disclosure provides a data transmission apparatus, where the apparatus is applied to a terminal, and the data transmission apparatus includes a memory, a transceiver, and a processor;
the memory is configured to store a computer program;
the transceiver is configured to transceive data under control of the processor;
the processor is configured to read the computer program in the memory and execute the following operations: determining, at a user plane air interface protocol layer, a plurality of IP packets belonging to a same data frame; if a quantity of an IP packet with transmission error in the plurality of IP packets is greater than or equal to a quantity threshold, at the user plane air interface protocol layer, stopping a transmission of a remaining IP packet in the plurality of IP packets, or lowering a transmission priority of the remaining IP packet to prioritize a transmission of other data frames on a QoS flow where the data frame is located or prioritize a transmission of a data frame on other QoS flows.

In some optional implementations, the user plane air interface protocol layer is a PDCP layer; the processor further executes the following operations: discarding, on a PDCP entity carrying the remaining IP packet, a PDCP SDU including the remaining IP packet; or, adjusting, on the PDCP entity carrying the remaining IP packet, the PDCP SDU including the remaining IP packet such that the PDCP SDU including the remaining IP packet is to be transmitted after other PDCP SDUs.

In some optional implementations, the processor further executes the following operations: adjusting, on the PDCP entity carrying the remaining IP packet, the PDCP SDU including the remaining IP packet such that the PDCP SDU including the remaining IP packet is to be transmitted after other PDCP SDUs.

In some optional implementations, the processor further executes at least one of the following operations: for a data frame belonging to a periodic service, if there is, in a service period, only one data frame for the periodic service, determining IP packets included in all PDCP SDUs within a same service period as the plurality of IP packets belonging to the same data frame; or,
among IP packets included in multiple PDCP SDUs, determining IP packets carrying a same data frame label as the plurality of IP packets belonging to the same data frame; or,
among IP packets included in multiple PDCP SDUs, determining the plurality of IP packets belonging to the same data frame by performing deep packet parsing of the IP packets; or,
among IP packets included in multiple PDCP SDUs, determining IP packets included in PDCP SDUs carrying a same group identifier as the plurality of IP packets belonging to the same data frame, where a group identifier carried by a PDCP SDU is from an SDAP layer.

In some optional implementations, the user plane air interface protocol layer is a MAC; the processor further executes the following operations: discarding an RLC PDU including the remaining IP packet in a received RLC PDU; or,
lowering a priority of a logical channel corresponding to a DRB entity that carries the remaining IP packet, to prioritize a data transmission of other logical channels.

In some optional implementations, the processor further executes the following operations: at the MAC layer, determining the IP packet with transmission error in the plurality of IP packets based on a HARQ of a physical layer and/or feedback information indicating that a retransmission is still unsuccessful.

In some optional implementations, the processor further executes at least one of the following operations: among IP packets included in multiple MAC SDUs, determining IP packets included in MAC SDUs carrying a same group identifier as the plurality of IP packets belonging to the same data frame, where a group identifier carried by a MAC SDU is from an SDAP layer, a PDCP layer, or an RLC layer; or,
among IP packets included in multiple MAC SDUs, determining IP packets transmitted on a same sub logical channel as the plurality of IP packets belonging to the same data frame, where in an RLC layer, PDCP PDUs including IP packets of different data frames are mapped to different sub logical channels, and PDCP PDUs including IP packets of a same data frame are mapped to a same sub logical channel.

In some optional implementations, the quantity threshold is equal to 1, or the quantity threshold is pre-configured by a network device for the terminal for each DRB or each QoS flow, or the quantity threshold is specified by a protocol.

In some optional implementations, the processor further executes the following operations: receiving configuration information from a network device, where the configuration information includes at least one of the following: whether to allow stopping a transmission of an IP packet at the user plane air interface protocol layer, or whether to allow lowering a transmission priority of an IP packet at the user plane air interface protocol layer, or a manner of determining an IP packet transmission error, or the quantity threshold.

In a fourth aspect, the present disclosure provides a data transmission apparatus, where the apparatus is applied to a network device, and the data transmission apparatus includes a memory, a transceiver, and a processor;
the memory is configured to store a computer program;
the transceiver is configured to transceive data under control of the processor;
the processor is configured to read the computer program in the memory and execute the following operations: determining, at a user plane air interface protocol layer, a plurality of IP packets belonging to a same data frame; if a quantity of an IP packet with transmission error in the plurality of IP packets is greater than or equal to a quantity threshold, at the user plane air interface protocol layer, stopping a transmission of a remaining IP packet in the plurality of IP packets, or lowering a transmission priority of the remaining IP packet to prioritize a transmission of other data frames on a QoS flow where the data frame is located or prioritize a transmission of a data frame on other QoS flows.

In some optional implementations, the user plane air interface protocol layer is a PDCP layer, and the processor further executes the following operations: discarding, on a PDCP entity carrying the remaining IP packet, a PDCP SDU including the remaining IP packet; or,
adjusting, on the PDCP entity carrying the remaining IP packet, the PDCP SDU including the remaining IP packet such that the PDCP SDU including the remaining IP packet is to be transmitted after other PDCP SDUs.

In some optional implementations, the processor further executes the following operations: adjusting, on the PDCP entity carrying the remaining IP packet, the PDCP SDU including the remaining IP packet such that the PDCP SDU including the remaining IP packet is to be transmitted after other PDCP SDUs.

In some optional implementations, the processor further executes at least one of the following operations: for a data frame belonging to a periodic service, if there is, in a service period, only one data frame for the periodic service, determining IP packets included in all PDCP SDUs within a same service period as the plurality of IP packets belonging to the same data frame; or,
among IP packets included in multiple PDCP SDUs, determining IP packets carrying a same data frame label as the plurality of IP packets belonging to the same data frame; or,
among IP packets included in multiple PDCP SDUs, determining the plurality of IP packets belonging to the same data frame by performing deep packet parsing of the IP packets; or,
among IP packets included in multiple PDCP SDUs, determining IP packets included in PDCP SDUs carrying a same group identifier as the plurality of IP packets belonging to the same data frame, where a group identifier carried by a PDCP SDU is from an SDAP layer.

In some optional implementations, the user plane air interface protocol layer is a MAC; the processor further executes the following operations: discarding an RLC PDU including the remaining IP packet in a received RLC PDU; or,
lowering a priority of a logical channel corresponding to a DRB entity that carries the remaining IP packet, to prioritize a data transmission of other logical channels.

In some optional implementations, the processor further executes the following operations: at the MAC layer, determining the IP packet with transmission error in the plurality of IP packets based on a HARQ of a physical layer and/or feedback information indicating that a retransmission is still unsuccessful.

In some optional implementations, the processor further executes at least one of the following operations: among IP packets included in multiple MAC SDUs, determining IP packets included in MAC SDUs carrying a same group identifier as the plurality of IP packets belonging to the same data frame, where a group identifier carried by a MAC SDU is from an SDAP layer, a PDCP layer, or an RLC layer; or,
among IP packets included in multiple MAC SDUs, determining IP packets transmitted on a same sub logical channel as the plurality of IP packets belonging to the same data frame, where in an RLC layer, PDCP PDUs including IP packets of different data frames are mapped to different sub logical channels, and PDCP PDUs including IP packets of a same data frame are mapped to a same sub logical channel.

In some optional implementations, the quantity threshold is equal to 1, or the quantity threshold is pre-configured by the network device for each DRB or each QoS flow, or the quantity threshold is specified by a protocol.

In some optional implementations, the processor further executes the following operations: sending configuration information to a terminal, where the configuration information includes at least one of the following: whether to allow stopping a transmission of an IP packet at the user plane air interface protocol layer, or whether to allow lowering a transmission priority of an IP packet at the user plane air interface protocol layer, or a manner of determining an IP packet transmission error, or the quantity threshold.

In a fifth aspect, the present disclosure provides a data transmission apparatus, where the apparatus is applied to a terminal, and the apparatus includes: a processing unit, configured to determine, at a user plane air interface protocol layer, a plurality of IP packets belonging to a same data frame; if a quantity of an IP packet with transmission error in the plurality of IP packets is greater than or equal to a quantity threshold, at the user plane air interface protocol layer, stop a transmission of a remaining IP packet in the plurality of IP packets, or lower a transmission priority of the remaining IP packet to prioritize a transmission of other data frames on a QoS flow where the data frame is located or prioritize a transmission of a data frame on other QoS flows.

In some optional implementations, the user plane air interface protocol layer is a PDCP layer; the processing unit is further configured to: discard, on a PDCP entity carrying the remaining IP packet, a PDCP SDU including the remaining IP packet; or,
adjust, on the PDCP entity carrying the remaining IP packet, the PDCP SDU including the remaining IP packet such that the PDCP SDU including the remaining IP packet is to be transmitted after other PDCP SDUs.

In some optional implementations, the processing unit is further configured to: adjust, on the PDCP entity carrying the remaining IP packet, the PDCP SDU including the remaining IP packet such that the PDCP SDU including the remaining IP packet is to be transmitted after other PDCP SDUs.

In some optional implementations, the processing unit is further configured to execute at least one of the following operations: for a data frame belonging to a periodic service, if there is, in a service period, only one data frame for the periodic service, determining IP packets included in all PDCP SDUs within a same service period as the plurality of IP packets belonging to the same data frame; or,
among IP packets included in multiple PDCP SDUs, determining IP packets carrying a same data frame label as the plurality of IP packets belonging to the same data frame; or,
among IP packets included in multiple PDCP SDUs, determining the plurality of IP packets belonging to the same data frame by performing deep packet parsing of the IP packets; or,
among IP packets included in multiple PDCP SDUs, determining IP packets included in PDCP SDUs carrying a same group identifier as the plurality of IP packets belonging to the same data frame, where a group identifier carried by a PDCP SDU is from an SDAP layer.

In some optional implementations, the user plane air interface protocol layer is a MAC; the processing unit is further configured to: discard an RLC PDU including the remaining IP packet in a received RLC PDU; or,
lower a priority of a logical channel corresponding to a DRB entity that carries the remaining IP packet, to prioritize a data transmission of other logical channels.

In some optional implementations, the processing unit is further configured to: at the MAC layer, determine the IP packet with transmission error in the plurality of IP packets based on a HARQ of a physical layer and/or feedback information indicating that a retransmission is still unsuccessful.

In some optional implementations, the processing unit is further configured to execute at least one of the following operations: among IP packets included in multiple MAC SDUs, determining IP packets included in MAC SDUs carrying a same group identifier as the plurality of IP packets belonging to the same data frame, where a group identifier carried by a MAC SDU is from an SDAP layer, a PDCP layer, or an RLC layer; or,
among IP packets included in multiple MAC SDUs, determining IP packets transmitted on a same sub logical channel as the plurality of IP packets belonging to the same data frame, where in an RLC layer, PDCP PDUs including IP packets of different data frames are mapped to different sub logical channels, and PDCP PDUs including IP packets of a same data frame are mapped to a same sub logical channel.

In some optional implementations, the quantity threshold is equal to 1, or the quantity threshold is pre-configured by a network device for the terminal for each DRB or each QoS flow, or the quantity threshold is specified by a protocol.

In some optional implementations, the data transmission apparatus further includes: a receiving unit, configured to receive configuration information from a network device, where the configuration information includes at least one of the following: whether to allow stopping a transmission of an IP packet at the user plane air interface protocol layer, or whether to allow lowering a transmission priority of an IP packet at the user plane air interface protocol layer, or a manner of determining an IP packet transmission error, or the quantity threshold.

In a sixth aspect, the present disclosure provides a data transmission apparatus, where the apparatus is applied to a network device, and the apparatus includes: a processing unit, configured to determine, at a user plane air interface protocol layer, a plurality of IP packets belonging to a same data frame; if a quantity of an IP packet with transmission error in the plurality of IP packets is greater than or equal to a quantity threshold, at the user plane air interface protocol layer, stop a transmission of a remaining IP packet in the plurality of IP packets, or lower a transmission priority of the remaining IP packet to prioritize a transmission of other data frames on a QoS flow where the data frame is located or prioritize a transmission of a data frame on other QoS flows.

In some optional implementations, the user plane air interface protocol layer is a PDCP layer; the processing unit is further configured to: discard, on a PDCP entity carrying the remaining IP packet, a PDCP SDU including the remaining IP packet; or,
adjust, on the PDCP entity carrying the remaining IP packet, the PDCP SDU including the remaining IP packet such that the PDCP SDU including the remaining IP packet is to be transmitted after other PDCP SDUs.

In some optional implementations, the processing unit is further configured to: adjust, on the PDCP entity carrying the remaining IP packet, the PDCP SDU including the remaining IP packet such that the PDCP SDU including the remaining IP packet is to be transmitted after other PDCP SDUs.

In some optional implementations, the processing unit is further configured to execute at least one of the following operations: for a data frame belonging to a periodic service, if there is, in a service period, only one data frame for the periodic service, determining IP packets included in all PDCP SDUs within a same service period as the plurality of IP packets belonging to the same data frame; or,
among IP packets included in multiple PDCP SDUs, determining IP packets carrying a same data frame label as the plurality of IP packets belonging to the same data frame; or,
among IP packets included in multiple PDCP SDUs, determining the plurality of IP packets belonging to the same data frame by performing deep packet parsing of the IP packets; or,
among IP packets included in multiple PDCP SDUs, determining IP packets included in PDCP SDUs carrying a same group identifier as the plurality of IP packets belonging to the same data frame, where a group identifier carried by a PDCP SDU is from an SDAP layer.

In some optional implementations, the user plane air interface protocol layer is a MAC; the processing unit is further configured to: discard an RLC PDU including the remaining IP packet in a received RLC PDU; or,
lower a priority of a logical channel corresponding to a DRB entity that carries the remaining IP packet, to prioritize a data transmission of other logical channels.

In some optional implementations, the processing unit is further configured to: at a MAC layer, determine the IP packet with transmission error in the plurality of IP packets based on a HARQ of a physical layer and/or feedback information indicating that a retransmission is still unsuccessful.

In some optional implementations, the processing unit is further configured to execute at least one of the following operations: among IP packets included in multiple MAC SDUs, determining IP packets included in MAC SDUs carrying a same group identifier as the plurality of IP packets belonging to the same data frame, where a group identifier carried by a MAC SDU is from an SDAP layer, a PDCP layer, or an RLC layer; or,
among IP packets included in multiple MAC SDUs, determining IP packets transmitted on a same sub logical channel as the plurality of IP packets belonging to the same data frame, where in an RLC layer, PDCP PDUs including IP packets of different data frames are mapped to different sub logical channels, and PDCP PDUs including IP packets of a same data frame are mapped to a same sub logical channel.

In some optional implementations, the quantity threshold is equal to 1, or the quantity threshold is pre-configured by the network device for each DRB or each QoS flow, or the quantity threshold is specified by a protocol.

In some optional implementations, the data transmission apparatus further includes: a sending unit, configured to send configuration information to a terminal, where the configuration information includes at least one of the following: whether to allow stopping a transmission of an IP packet at the user plane air interface protocol layer, or whether to allow lowering a transmission priority of an IP packet at the user plane air interface protocol layer, or a manner of determining an IP packet transmission error, or the quantity threshold.

In a seventh aspect, the present disclosure provides a processor-readable storage medium, where the processor-readable storage medium stores a computer program, and the computer program is used to cause a processor to execute the data transmission method according to the first aspect or the second aspect.

In an eighth aspect, the present disclosure provides a computer program product including instructions, where the instructions, when executed on a computer, cause the computer to execute the data transmission method according to the first aspect or the second aspect.

In a ninth aspect, the present disclosure provides a communication system including the network device as described in any of the above aspects and at least one terminal as described above.

The present disclosure provides a data transmission method, an apparatus, and a storage medium. In this method, the terminal or the network device determines the plurality of IP packets belonging to the same data frame at the user plane air interface protocol layer, and if the quantity of the IP packet with transmission error in the plurality of IP packets is greater than or equal to the quantity threshold, at the user plane air interface protocol layer, stops the transmission of the remaining IP packet in the plurality of IP packets, or lowers the transmission priority of the remaining IP packet to prioritize the transmission of other data frames on the QoS flow where the data frame is located or prioritize the transmission of the data frame on other QoS flows. Therefore, in a case that the IP packet transmission error in the data frame may affect correct parsing of the data frame, a data transmission delay of the same QoS flow or other QoS flows caused by the remaining IP packet continuing to occupy the air interface resource is avoided, thereby improving the efficiency of air interface resources.

It should be understood that the content described in the SUMMARY section is not intended to limit essential or important features of the embodiments of the present disclosure, nor is it intended to limit the scope of the present disclosure. Other features of the present disclosure will be readily understood from the following description.

### BRIEF DESCRIPTION OF DRAWINGS

In order to explain technical solutions in the present disclosure or in the prior art more clearly, drawings required to be used in the description of embodiments or the prior art will be introduced briefly in the following. It is obvious that the drawings in the following description are some embodiments of the present disclosure. For those skilled in the art, other drawings may also be obtained based on these drawings without creative effort.
FIG. 1(a) is an example diagram of an XR service modeled by frame level packet.
FIG. 1(b) is an example diagram of an XR service packet mapped to multiple IP packets at a 5G system air interface.
FIG. 1(c) is an example diagram of a relationship between a user plane protocol stack and a QoS flow.
FIG. 2 is a schematic diagram of an application scenario provided by an embodiment of the present disclosure.
FIG. 3 is a flowchart of a data transmission method provided by an embodiment of the present disclosure.
FIG. 4 is a flowchart of a data transmission method provided by another embodiment of the present disclosure.
FIG. 5 is an example diagram I of an IP packet transmission at a PDCP layer.
FIG. 6 is a flowchart of a data transmission method provided by another embodiment of the present disclosure.
FIG. 7 is an example diagram II of an IP packet transmission at a PDCP layer.
FIG. 8 is a flowchart of a data transmission method provided by another embodiment of the present disclosure.
FIG. 9 is a flowchart of a data transmission method provided by another embodiment of the present disclosure.
FIG. 10 is a schematic structural diagram of a data transmission apparatus provided by an embodiment of the present disclosure.
FIG. 11 is a schematic structural diagram of a data transmission apparatus provided by another embodiment of the present disclosure.
FIG. 12 is a schematic structural diagram of a data transmission apparatus provided by another embodiment of the present disclosure.
FIG. 13 is a schematic structural diagram of a data transmission apparatus provided by another embodiment of the present disclosure.

### DESCRIPTION OF EMBODIMENTS

In the present disclosure, "at least one" refers to one or more, and "a plurality of" refers to two or more. "And/or" describes an association relationship of associated objects, and means that there may be three types of relationship. For example, "A and/or B" may represent situations, namely, A exists alone, A and B exist at the same time, and B exists alone, where A and B may be singular or plural. The character "/" generally means that the associated objects before and after the character is of an "or" relationship. "At least one of the following items" or its similar expressions refers to any combination of these items, including any combination of single or plural items. For example, at least one of a, b, or c may represent: a, b, c, a-b, a-c, b-c, or a-b-c, where a, b, and c may be single or multiple.

It can be understood that steps or operations in embodiments of the present disclosure are only examples, and other operations or variations of various operations can be executed for the embodiments of the present disclosure. In addition, each step can be executed in a different order as presented in the embodiments of the present disclosure, and it may not be necessary to execute all operations in the embodiments of the present disclosure.

The technical solutions in the embodiments of the present disclosure will be described clearly and comprehensively in combination with accompanying drawings in the embodiments of the present disclosure. Obviously, the described embodiments are only part of the embodiments of the present disclosure, not all of them. All other embodiments obtained by those skilled in the art based on the embodiments of the present disclosure without creative effort belong to the protection scope of the present disclosure.

The technical solutions provided by the embodiments of the present disclosure can be applied to various systems, especially a 5G system. For example, an applicable system may be a global system of mobile communication (global system of mobile communication, GSM) system, a code division multiple access (code division multiple access, CDMA) system, a wideband code division multiple access (Wideband Code Division Multiple Access, WCDMA) general packet radio service (general packet radio service, GPRS) system, a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (New Radio, NR) system, etc. Each of the various systems includes a terminal and a network device. The system may also include a core network part, such as an evolved packet system (Evloved Packet System, EPS), a 5G system (5GS), etc.

The terminal involved in the embodiments of the present disclosure may refer to a device that provides voice and/or data connectivity to a user, a handheld device with a wireless connection function, or other processing devices connected to a wireless modem, etc. The name of the terminal may be different in different systems. For example, in the 5G system, the terminal may be called a user equipment (User Equipment, UE). A wireless terminal may communicate with one or more core networks (Core Network, CN) via a radio access network (Radio Access Network, RAN). The wireless terminal may be a mobile terminal, such as a mobile phone (or "cellular" phone) and a computer with a mobile terminal. For example, the mobile terminal device may be portable, pocket-sized, handheld, computer-built or vehicle-mounted mobile apparatuses, which exchange language and/or data with the radio access network, such as a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA) and other devices. The wireless terminal may also be called a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), a user device (user device), which is not limited in the embodiments of the present disclosure.

The network device involved in the embodiments of the present disclosure may be a base station, and the base station may include multiple cells providing services for terminals. Depending on a specific application, the base station may also be called an access point, or a device in an access network that communicates with a wireless terminal through one or more sectors over an air interface, or other names. The network device may be configured to exchange a received over-the-air frame with an Internet protocol (Internet Protocol, IP) packet, and act as a router between the wireless terminal and the rest of the access network, where the rest of the access network may include an Internet protocol (IP) communication network. The network device may also coordinate property management of the air interface. For example, the network device involved in the embodiments of the present disclosure may be a network device (Base Transceiver Station, BTS) in a global system for mobile communications (Global System for Mobile Communications, GSM) or code division multiple access (Code Division Multiple Access, CDMA), or a network device (NodeB) in wide-band code division multiple access (Wide-band Code Division Multiple Access, WCDMA), or an evolutional network device (evolutional Node B, eNB or e-NodeB) in a long term evolution (long term evolution, LTE) system, a 5G base station (gNB) in a 5G network architecture (next generation system), or a home evolved base station (Home evolved Node B, HeNB), a relay node (relay node), a home base station (femto), a pico base station (pico), etc., which is not limited in the embodiments of the present disclosure. In some network structures, the network device may include a centralized unit (centralized unit, CU) node and a distributed unit (distributed unit, DU) node, and the centralized unit and the distributed unit may also be geographically separated.

One or more antennas may be used by the network device and the terminal respectively for multi input multi output (Multi Input Multi Output, MIMO) transmission therebetween, and the MIMO transmission may be single user MIMO (Single User MIMO, SU-MIMO) or multiple user MIMO (Multiple User MIMO, MU-MIMO). Depending on the morphology and number of root antenna combinations, the MIMO transmission may be 2D-MIMO, 3D-MIMO, FD-MIMO or massive-MIMO, and may also be diversity transmission or precoding transmission or beamforming transmission, etc.

First, discovery of technical problems to be solved by the embodiments of the present disclosure is described.

Taking an XR service as an example, the XR service is modeled in a 5G system by frame level data packet (i.e. modeled based on data frame). Each packet (Packet, also referred to as packet) corresponds to a data frame (also referred to as an XR video frame in the XR service), and each data frame can be divided into multiple IP packets. XR is a general term for different types of reality, which refers to all environments and human-computer interactions that combine reality and virtuality generated by computer technology and device, including representative forms such as augmented reality (Augmented Reality, AR), mixed reality (Mixed Reality, MR), and virtual reality (Virtual Reality, VR).

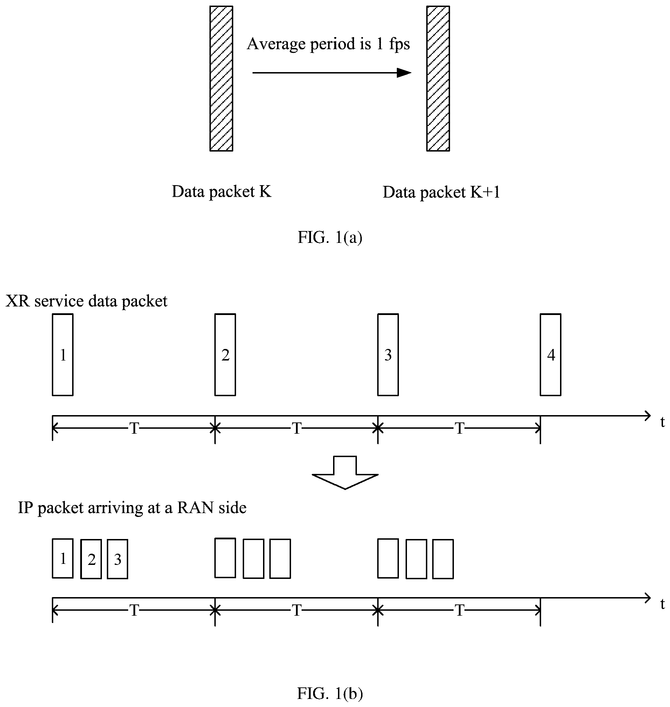

Referring to FIG. 1(a) and FIG. 1(b), FIG. 1(a) is an example diagram of an XR service modeled by frame level packet, and FIG. 1(b) is an example diagram of an XR service packet mapped to multiple IP packets at a 5G system air interface. As shown in FIG. 1(a), the XR service includes data packets that follow a certain probability distribution. Taking a data packet K and a data packet K+1 as examples, the data packet K represents a data frame K including multiple IP packets, and the data packet K+1 represents a data frame K+1 including multiple IP packets, and an average period of data frames is 1 frame per second (frame per second, fps). As shown in FIG. 1(b), four XR service packets 1-4 are mapped respectively to multiple IP packets on a radio access network (Radio Access Network, RAN) side. For example, the first XR packet is mapped to the first three IP packets on the RAN side, where t represents time and T represents a duration.

In XR service, service characteristics requirements are specific for data frames, such as, a period of 60fps, a data transmission rate of 10 million bits per second (Million bits per second, Mbps), and a packet delay budget (Packet Delay Budget) of 30 milliseconds (ms). Therefore, the transmission speed, reliability, and latency of data frames are crucial for such type of service.

In XR service, an air interface transmission is carried out with IP as a basic unit, that is, each IP packet of a data frame is transmitted independently on an air interface. In addition, in XR service, a parameter: survival time (survival time) of a quality of service (Quality of Service, QoS) flow, is used to characterize the availability of the service. When a service data packet (which may also be referred to as a message, a high-level message, and in the embodiments of the present disclosure, a data frame) is transmitted incorrectly, the survival time is initiated. If subsequent service data packets can be transmitted normally during a validity period of the survival time, such service transmission is considered to be available. If the survival time expires and the service data packet still cannot be transmitted correctly, such service transmission is considered to be unavailable, that is, a communication link between a sending end and a receiving end of service data is unavailable.

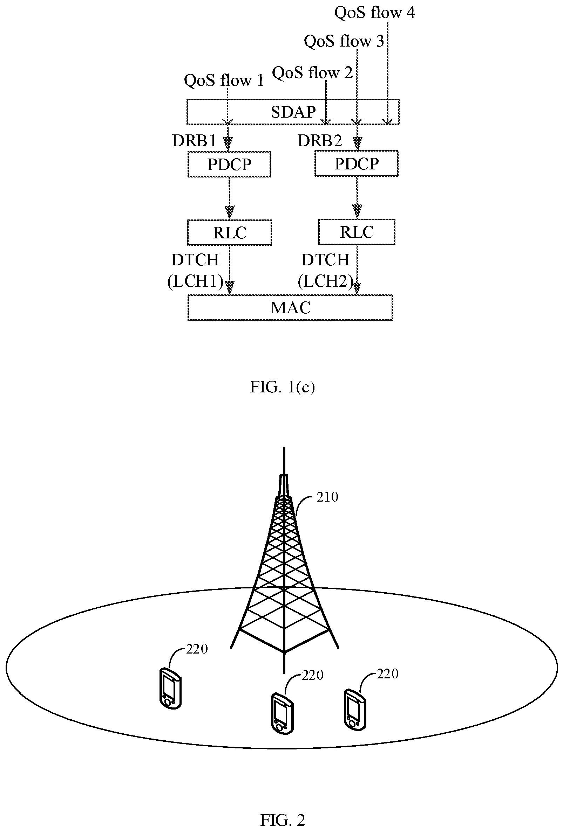

For ease of understanding, FIG. 1(c) is an example diagram of a relationship between a user plane protocol stack and a QoS flow. As shown in FIG. 1(c), a user plane air interface protocol stack includes a service data adaptation protocol (Service Data Adaptation Protocol, SDAP) layer, a packet data convergence protocol (Packet Data Convergence Protocol, PDCP) layer, a radio link control (Radio Link Control, RLC) layer and a media access control (Media Access Control, MAC) layer. One or more QoS flows (QoS flow 1, QoS flow 2, QoS flow 3 and QoS flow 4 in FIG. 1(c)) are mapped to a data radio bearer (Data Radio Bearer, DRB) after passing through SDAP. For example, QoS flow 1 is mapped to DRB 1; QoS flow 2, QoS flow 3, and QoS flow 4 are mapped to DRB2. A medium is transmitted from the RLC layer to the MAC layer through a dedicated traffic channel (Dedicated Traffic Channel, DTCH, a type of logical channel). FIG. 1(c) takes DTCH including logical channel (Logical Channel, LCH) 1 and LCH2 as an example. IP packets are transmitted on the QoS flows, in other words, the transmission of data frames on the QoS flows is presented as IP packets.

At present, IP packets on a same QoS flow are transmitted sequentially. Even if the first IP packet of a data frame is transmitted incorrectly, other IP packets of that data frame are still transmitted sequentially (the transmission of the other IP packets still need to occupy many air interface resources), and afterwards IP packets of a next data frame are transmitted. The receiving end only parses a data frame after all IP packets of the data frame have been transmitted.

In a case that a data frame cannot be correctly parsed due to transmission error occurring to some IP packets of a data frame, this approach of continuing to transmit remaining IP packets of the data frame sequentially has the following shortcomings: 1) a transmission of subsequent data frames of a QoS flow where the data frame is located and a data frame on other QoS flows is delayed; 2) a survival time-based determination of the QoS flow where the data frame is located (for the survival time-based determination, a data frame transmitting failure determination can only be made after all IP packets of the data frame are transmitted) is delayed; 3) a triggering of TCP/IP slow start and TCP/IP retransmission is delayed, where TCP/IP slow start is based on TCP feedback, and a transmission error of an IP packet is not sufficient to start TCP/IP retransmission in time, thus delaying a retransmission of the IP packet with transmission error.

In summary, the above approach has the problem of low efficiency of air interface resource, and the low efficiency of air interface resource is reflected in multiple aspects such as low utilization of air interface resource, waste of air interface resource, resultant transmission delay and so on.

In order to solve the above problems, the embodiments of the present disclosure provide a data transmission method, an apparatus, and a storage medium. In this method, a plurality of IP packets belonging to a same data frame are determined at a user plane air interface protocol layer, if a quantity of an IP packet with transmission error in the plurality of IP packets is greater than or equal to a quantity threshold, at the user plane air interface protocol layer, a transmission of a remaining IP packet in the plurality of IP packets is stopped, or a transmission priority of the remaining IP packet is lowered to prioritize a transmission of other data frames on a QoS flow where the data frame is located or prioritize a transmission of a data frame on other QoS flows. Thus, the remaining IP packet, except for the IP packet with transmission error, in the plurality of IP packets of the data frame is prevented from continuing to occupy air interface resources, the above shortcomings are solved, and the efficiency of air interface resources is improved.

Solving the above shortcomings is reflected in the following aspects: 1) beneficial for other data frames on the QoS flow where the data frame is located or data on other QoS flows to obtain uplink resources more quickly, and thus improving the efficiency of air interface resources; 2) beneficial for timely knowledge of data frame transmission error, and thus determining timely whether a startup of the survival time is required; 3) beneficial for fast start of TCP/IP slow start and TCP/IP retransmission.

The method and the apparatus are based on a same application concept. Since the method and the apparatus solve the problem with similar principles, reference for the implementation of the apparatus and the method can be made to each other, and the repetition is not repeated here.

It should be noted that a transmission in the embodiments of the present disclosure may include sending and receiving, with an executive device being a communication device (which may be a sending end or a receiving end), and the communication device may be a terminal or a network device. In subsequent embodiments, the description is made in accordance with the executive device being the communication device, and the executive entity will be separately stated for content that is only executed by the terminal or the network device.

Preferably, a transmission in the embodiments of the present disclosure refers to sending, the executive device is a sending end, and the sending end may be a terminal or a network device.

It should be noted that the data frame in the embodiments of the present disclosure is not limited to XR service.

Referring to FIG. 2, FIG. 2 is a schematic diagram of an application scenario provided by an embodiment of the present disclosure. As shown in FIG. 2, the present embodiment provides a communication system, and the communication system includes a network device 210 and a terminal 220, where the present embodiment illustrates three terminals 220 as examples. In the communication system, service data can be transmitted between the terminal 220 and the network device 210. Specifically, during transmitting the service data modeled by frame level packet, IP packets can be transmitted between the terminal 220 and the network device 210.

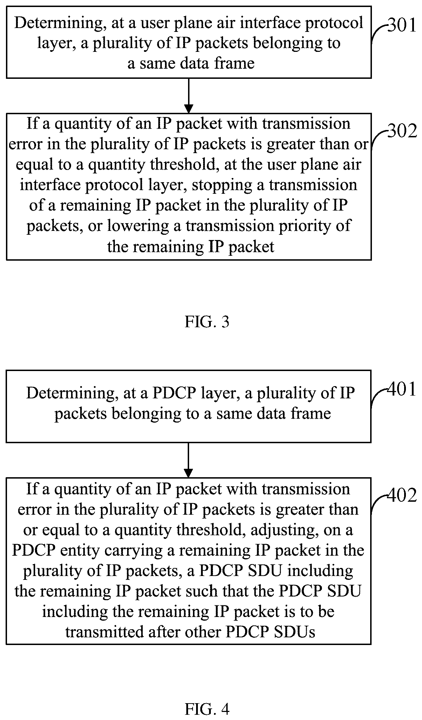

Referring to FIG. 3, FIG. 3 is a schematic flowchart of a data transmission method provided by an embodiment of the present disclosure. As shown in FIG. 3, the method of the present embodiment may include the following steps.

S301: determining, at a user plane air interface protocol layer, a plurality of IP packets belonging to a same data frame.

A user plane air interface protocol stack in a communication system includes multiple user plane air interface protocol layers, such as an SDAP layer, a PDCP layer, an RLC layer, and a MAC layer shown in FIG. 1(c). The user plane air interface protocol layer in the present embodiment is one of the user plane air interface protocol layers in the user plane air interface protocol stack.

In the present embodiment, a communication device processes the plurality of IP packets of the data frame layer by layer in the user plane air interface protocol stack when transmitting the data frame. For example, the IP packets are processed differently at the SDAP layer, PDCP layer, RLC layer, and MAC layer, and finally modulated into wireless signals for transmission at a physical layer. When the plurality of IP packets arrive at one of the user plane air interface protocol layers, the plurality of IP packets belonging to the same data frame can be determined at that user plane air interface protocol layer. For example, when multiple SDAP protocol data units (Protocol Data Units, PDUs) arrive at the PDCP layer, the plurality of IP packets belonging to the same data frame in IP packets included in multiple SDAP PDUs can be determined at the PDCP layer.

S302: if a quantity of an IP packet with transmission error in the plurality of IP packets is greater than or equal to a quantity threshold, at the user plane air interface protocol layer, stopping a transmission of a remaining IP packet in the plurality of IP packets, or lowering a transmission priority of the remaining IP packet.

In the present embodiment, since the plurality of IP packets of the same data frame are transmitted independently, and IP packets on a same QoS flow are transmitted sequentially, there is a specific order in terms of the transmission time of the plurality of IP packets of the same data frame. In the user plane air interface protocol layer, after the plurality of IP packets belonging to the same data frame are determined, if the quantity of the IP packet with transmission error in the plurality of IP packets is greater than or equal to the quantity threshold, it means that the data frame will not be correctly parsed due to the influence of the IP packet with transmission error. If there is the remaining IP packet that has not been transmitted (sent) in the plurality of IP packets, the transmission (sending) of the remaining IP packet can be stopped at the user plane air interface protocol layer, or the transmission priority of the remaining IP packet in the plurality of IP packets can be lowered to prioritize a transmission (sending) of other data frames on a QoS flow where the data frame is located or prioritize a transmission (sending) of a data frame on other QoS flows. Therefore, compared to continuing to sequentially transmit the remaining IP packet in the plurality of IP packets, by stopping the transmission (sending) of the remaining IP packet or lowering the transmission priority of the remaining IP packet, air interface resources can be used for the transmission of other data frames, thereby improving the efficiency of air interface resources.

In the embodiment of the present disclosure, the plurality of IP packets belonging to the same data frame are determined at the user plane air interface protocol layer, and if the quantity of the IP packet with transmission error in the plurality of IP packets is greater than or equal to the quantity threshold, at the user plane air interface protocol layer, the transmission (sending) of the remaining IP packet in the plurality of IP packets is stopped, or the transmission priority of the remaining IP packet in the plurality of IP packets is lowered. Therefore, in the case that the IP packet transmission error in the same data frame affects correct parsing of the data frame, the remaining IP packet in the same data frame are prevented from continuing to occupy the air interface resource, the transmission of other data frames is prioritized, so as to improve the efficiency of air interface resources.

In some embodiments, the quantity threshold is equal to 1.

A possible implementation of S302 when the quantity threshold is equal to 1 includes: if one or more (or at least one) IP packets of the plurality of IP packets are transmitted incorrectly, at the user plane air interface protocol layer, stopping the transmission (sending) of the remaining IP packet in the plurality of IP packets, or lowering the transmission priority of the remaining IP packet in the plurality of IP packets. Thus, for a case where the data frame cannot be correctly parsed as long as one IP packet is transmitted incorrectly, the efficiency of air interface resources is improved.

In some embodiments, when the embodiment of the present disclosure is applied to a terminal, the quantity threshold is pre-configured by a network device for the terminal for each DRB or each QoS flow, or the quantity threshold is specified by a protocol, to improve the flexibility of quantity threshold setting. In particular, a suitable data threshold setting manner can be selected according to service requirements and scenario requirements.

In some embodiments, when the embodiment of the present disclosure is applied to a network device, the quantity threshold is pre-configured by the network device for each DRB or each QoS flow (i.e., the network device configures the quantity threshold for itself), or the quantity threshold is specified by a protocol, to improve the flexibility of a quantity threshold setting. In particular, a suitable data threshold setting manner can be selected according to service requirements and scenario requirements.

In some optional implementations, the network device may configure the quantity threshold according to characteristics of a service data flow, so as to configure the quantity threshold in a targeted manner based on service characteristics, improve the accuracy of the quantity threshold, and thereby improve the reliability of data transmission. The characteristics of the service data volume include a fault-tolerant mechanism of data frames in the service. For example, if there are N IP packets in a data frame, and the data frame cannot be correctly parsed when K IP packets are transmitted incorrectly, the network device can configure the quantity threshold to be K, where N is greater than K.

In some embodiments, the user plane air interface protocol layer includes the PDCP layer and/or the MAC layer. Therefore, in the case that the quantity of the IP packet with transmission error in the plurality of IP packets of the same data frame is greater than or equal to the quantity threshold, the communication device can, at the PDCP layer and/or the MAC layer, stop the transmission (sending) of the remaining IP packet in the plurality of IP packets, or lower the transmission priority of the remaining IP packet.

Subsequently, data transmission methods when the user plane air interface protocol layer is the PDCP layer and when the user plane air interface protocol layer is the MAC layer are described by multiple embodiments respectively for further description.

Referring to FIG. 4, FIG. 4 is a schematic flowchart of a data transmission method provided by another embodiment of the present disclosure. As shown in FIG. 4, the method of the present embodiment may include the following steps.

S401: determining, at a PDCP layer, a plurality of IP packets belonging to a same data frame.

In the present embodiment, after a plurality of SDAP PDUs including IP packets arrive at the PDCP layer, a communication device (sending end) can determine, at the PDCP layer, the plurality of IP packets of the same data frame in the IP packets included in the plurality of SDAP PDUs. The SDAP PDU is a PDCP SDU, so in other words, the plurality of IP packets of the same data frame in the IP packets included in the plurality of PDCP SDUs can be determined at the PDCP layer.

In some embodiments, possible implementations of S401 may include at least one of the following (i.e., determining, at the PDCP layer, the plurality of IP packets belonging to the same data frame can be implemented through at least one of the following manners).
1) For a data frame belonging to a periodic service, if there is, in a service period, only one data frame for the periodic service, determining IP packets included in all PDCP SDUs within a same service period as the plurality of IP packets belonging to the same data frame. Therefore, when the data frame belongs to the periodic service, the IP packets included in all PDCP SDUs that arrive at the PDCP layer in the same service period can be determined, based on the service period of the periodic service, as the plurality of IP packets belonging to the same data frame.

The communication device (sending end) may acquire whether the data frame belongs to the periodic service from an application layer, and there is no restriction on a specific process of acquiring whether the data frame belongs to the periodic service.

2) Among IP packets included in a plurality of PDCP SDUs, determining IP packets carrying a same data frame label as the plurality of IP packets belonging to the same data frame. Where the plurality of IPs of a same data frame carry a same data frame label, and IP packets of different data frames carry different data frame labels. In other words, the data frame label corresponding to the data frame is unique. Therefore, in a case where an IP packet carries a data frame label, the plurality of IP packets belonging to the same data frame can be determined based on the data frame label.

The communication device (sending end) may add the same data frame label to the plurality of IP packets of the same data frame at the application layer, and add different data frames to IP packets of different data frames. There is no restriction on a specific process of adding data frame labels to IP packets.

3) Among IP packets included in a plurality of PDCP SDUs, determining the plurality of IP packets belonging to the same data frame by performing deep packet parsing of the IP packets. Deep packet parsing refers to obtaining frame characteristics through IP packet parsing, and the plurality of IP packets belonging to the same data frame can be determined by using parsed frame effects.

Specifically, the communication device (sending end) performs deep packet parsing on the IP packets included in the plurality of PDCP SDUs at the PDCP layer to obtain inner layer information of the IP packets (the inner layer information of the IP packets can reflect the frame characteristics). Data frames to which the IP packets belong are determined according to the inner layer information of the IP packets, and the plurality of IP packets belonging to the same data frame are determined according to the data frames to which multiple IP packets belong. Thus, the accuracy of determining the plurality of IP packets belonging to the same data frame is improved based on deep packet parsing.

4) Among IP packets included in a plurality of PDCP SDUs, determining IP packets included in PDCP SDUs carrying a same group identifier as the plurality of IP packets belonging to the same data frame, where a group identifier carried by a PDCP SDU is from an SDAP layer. The group identifier is used to identify the data frame, which is introduced in the present embodiment to classify multiple IP packets included in one data frame. The IP packets included in the PDCP SDU carrying the same group identifier belong to the same data frame.

Specifically, the communication device (sending end) can determine the plurality of IP packets belonging to the same data frame at the SDAP layer according to the data frame label of the IP packets or by performing deep packet parsing on the IP packets. For the plurality of IP packets belonging to the same data frame, the same group identifier is carried in the SDAP PDU including these IP packets, and then the SDAP PDU is transmitted to the PDCP layer. After the SDAP PDU arrives at the PDCP layer, the communication device determines, based on the group identifier carried in the PDCP SDU, the IP packets included in the PDCP SDU carrying the same group identifier as the plurality of IP packets belonging to the same data frame.

Thus, the accuracy of determining the plurality of IP packets belonging to the same data frame is improved by using the group identifier.

Unlike data frames, after the transmission of the plurality of IP packets belonging to the same data frame is completed, the group identifier corresponding to the data frame may also be used to identify other data frames.

S402: if a quantity of an IP packet with transmission error in the plurality of IP packets is greater than or equal to a quantity threshold, adjusting, on a PDCP entity carrying a remaining IP packet in the plurality of IP packets, a PDCP SDU including the remaining IP packet such that the PDCP SDU including the remaining IP packet is to be transmitted after other PDCP SDUs.

In the present embodiment, the communication device determines whether there is the IP packet with transmission error in the plurality of IP packets at the PDCP layer. If there is the IP packet with transmission error in the plurality of IP packets and the quantity of the IP packet with transmission error is greater than or equal to the quantity threshold, it is indicated that the data frame to which the plurality of IP packets belong cannot be correctly parsed due to the influence of IP packet transmission error. At this time, if there is still remaining IP packet that has not been transmitted in the plurality of IP packets, the communication device can adjust, in a transmission queue of the PCDP layer, the PDCP SDU including the remaining IP packet such that the PDCP SDU including the remaining IP packet is to be transmitted after other PDCP SDUs on the PDCP entity to which the remaining IP packet belongs, which is equivalent to lowering a transmission priority of the remaining IP packet. Thus, other data frames are prioritized for transmission by reordering a transmission sequence of IP packets in the PDCP layer to improve the efficiency of air interface resources.

In the embodiment of the present disclosure, at the PDCP layer, if the quantity of the IP packet with transmission error in the plurality of IP packets belonging to the same data frame is greater than or equal to the quantity threshold, the communication device adjusts the PDCP SDU including the remaining IP packet that has not been transmitted in the plurality of IPs such that the PDCP SDU including the remaining IP packet is to be transmitted after other PDCP SDUs on the PDCP entity, so as to avoid the remaining IP packet of the data frame that has not been transmitted occupying air interface resources and delaying the transmission of other data frames in the case that the data frame cannot be correctly parsed due to the IP packet transmission error, and to improve the efficiency of air interface resources.

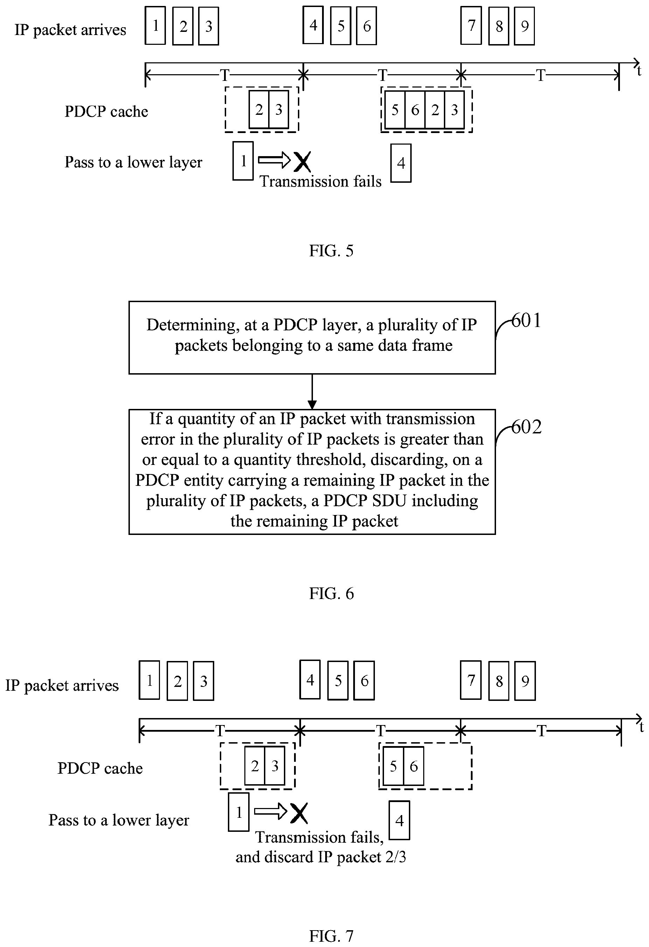

Referring to FIG. 5, FIG. 5 is an example diagram I of an IP packet transmission at a PDCP layer. As shown in FIG. 5, 1-9 represent multiple IP packets, where 1-3 are multiple IP packets belonging to a same data frame, 4-6 are multiple IP packets belonging to a same data frame, 7-9 are multiple IP packets belonging to a same data frame, T represents a duration, t represents time, and a process is as follows.
Step 1): IP packets 1-3 arrive at the PDCP layer.
Step 2): a communication device stores the IP packets 1-3 in a cache of the PDCP layer. After obtaining air interface resources, the communication device passes an IP packet 1 to a lower layer for transmission, and the transmission of IP packet 1 fails.
Step 3): IP packets 4-5 arrive at the cache of the PDCP layer, and the communication device reorders a data transmission stack at the PDCP layer, places IP packets 2-3 at an end of queue (i.e., in the embodiment shown in FIG. 4, the PDCP SDU including the remaining IP packet is adjusted such that the PDCP SDU including the remaining IP packet is to be transmitted after other PDCP SDUs on the same PDCP entity).
Step 4): after obtaining air interface resources, the communication device passes IP packets 4-6 to the lower layer for transmission.

Referring to FIG. 6, FIG. 6 is a schematic flowchart of a data transmission method provided by an embodiment of the present disclosure. As shown in FIG. 6, the method of the present embodiment may include the following steps.

S601: determining, at a PDCP layer, a plurality of IP packets belonging to a same data frame.

Reference for implementation principles and technical effects of S601 can be made to the aforementioned embodiments and details will not be repeated here.

S602: if a quantity of an IP packet with transmission error in the plurality of IP packets is greater than or equal to a quantity threshold, discarding, on a PDCP entity carrying a remaining IP packet in the plurality of IP packets, a PDCP SDU including the remaining IP packet.

In the present embodiment, a communication device determines whether there is the IP packet with transmission error in the plurality of IP packets at the PDCP layer. If there is the IP packet with transmission error in the plurality of IP packets and the quantity of the IP packet with transmission error is greater than or equal to the quantity threshold, it is indicated that the data frame to which the plurality of IP packets belong cannot be correctly parsed due to the influence of IP packet transmission error. At this time, if there is still remaining IP packet that has not been transmitted in the plurality of IP packets, the PDCP SDU including the remaining IP packet is discarded on the PDCP entity carrying the remaining IP packet. On the one hand, the remaining IP can be avoided from continuing to occupy air interface resources, so that other subsequent data frames can obtain air interface resources more quickly and the air interface resource efficiency can be improved. On the other hand, due to an active discarding of the remaining IP in the data frame, the communication device can timely obtain feedback information about data frame loss, and then detect timely whether a startup of survival time is required. On the other hand, the actively discarding of the remaining IP packet in the data frame is beneficial for quickly triggering TCP/IP slow start and TCP/IP retransmission.

In the embodiment of the present disclosure, in the PDCP layer, if the quantity of the IP packet with transmission error in the plurality of IP packets belonging to the same data frame is greater than or equal to the quantity threshold, the PDCP SDU of the remaining IP packet that has not been transmitted in the plurality of IPs is discarded, so as to improve the efficiency of air interface resources and facilitate timely triggering the survival time, TCP/IP slow start, and TCP/IP retransmission.

Referring to FIG. 7, FIG. 7 is an example diagram II of an IP packet transmission at a PDCP layer. As shown in FIG. 7, 1-9 represent multiple IP packets, where 1-3 are multiple IP packets belonging to a same data frame, 4-6 are multiple IP packets belonging to a same data frame, 7-9 are multiple IP packets belonging to a same data frame, T represents a duration, t represents time, and a process is as follows.
Step 1): IP packets 1-3 arrive at the PDCP layer.
Step 2): a communication device stores the IP packets 1-3 in a cache of the PDCP layer. After obtaining air interface resources, the communication device passes an IP packet 1 to a lower layer for transmission. The transmission of IP packet 1 fails, and the communication device discards IP packets 2-3.
Step 3): IP packets 4-5 arrive at the cache of the PDCP layer.
Step 4): after obtaining air interface resources, the communication device passes IP packets 4-6 to the lower layer for transmission.

Based on the embodiments shown in FIG. 4 and FIG. 6, in some embodiments, at the PDCP layer, the IP packet with transmission error in the plurality of IP packets may be determined based on an automatic repeat-request (Automatic Repeat-reQuest, ARQ) of an RLC layer and/or a hybrid automatic repeat request (Hybrid Automatic Repeat reQuest, HARQ) of a physical layer, so as to improve the accuracy of determining the IP packet with transmission error.

Specifically, when receiving ARQ feedback from the RLC layer about an IP packet or the HARQ feedback from the physical layer about an IP packet at the PDCP layer, the communication device determines that the IP packet has been transmitted incorrectly.

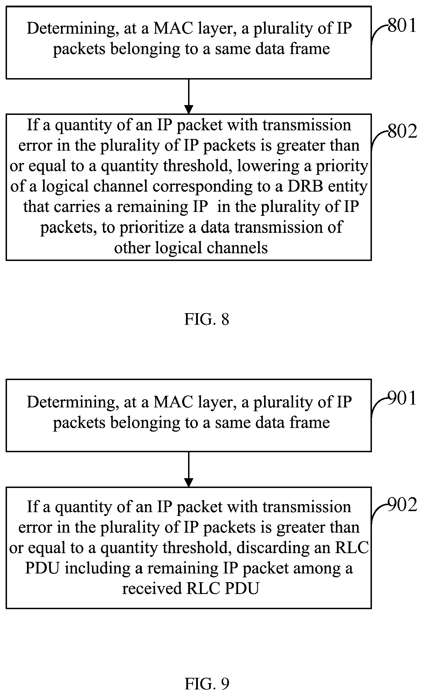

Referring to FIG. 8, FIG. 8 is a schematic flowchart of a data transmission method provided by an embodiment of the present disclosure. As shown in FIG. 8, the method of the present embodiment may include the following steps.

S801: determining, at a MAC layer, a plurality of IP packets belonging to a same data frame.

In the present embodiment, after a plurality of SDAP PDUs including IP packets arrive at the MAC layer, a communication device can determine, at the MAC layer, the plurality of IP packets of the same data frame in the IP packets included in the plurality of RLC PDUs. The RLC PDU is a MAC SDU, so in other words, the plurality of IP packets of the same data frame can be determined at the MAC layer in the IP packets included in the plurality of MAC SDUs.

In some embodiments, possible implementations of S801 may include at least one of the following (i.e., determining, at the MAC layer, the plurality of IP packets belonging to the same data frame can be implemented through at least one of the following manners).
1) Among IP packets included in multiple MAC SDUs, determining IP packets included in MAC SDUs carrying a same group identifier as the plurality of IP packets belonging to the same data frame. A group identifier carried by a MAC SDU is from an SDAP layer, a PDCP layer, or an RLC layer. Specifically, the group identifier corresponding to the IP packet can be determined at the SDAP layer, the PDCP layer, or the RLC layer, and the group identifier can be carried in the SDAP PDU, the PDCP PDU, or the RLC PDU, so that the MAC SDU carries the group identifier.

Reference for the meaning and function of the group identifier can be made to the aforementioned embodiments and details will not be repeated.

2) Among IP packets included in multiple MAC SDUs, determining IP packets transmitted on a same sub logical channel as the plurality of IP packets belonging to the same data frame. In the RLC layer, PDCP PDUs including IP packets of different data frames are mapped to different sub logical channels, and PDCP PDUs including IP packets of a same data frame are mapped to a same sub logical channel. Therefore, sub logical channels are utilized to improve the accuracy of determining the plurality of IP packets belonging to the same data frame.

One logical channel includes one or more sub logical channels, and the sub logical channel are dynamically shared. After the plurality of IP packets of a data frame are transmitted, a sub logical channel can be used to transmit IP packets of other data frames, but when the plurality of IP packets of a data frame occupying a sub logical channel are not fully transmitted, the sub logical channel can only be occupied by the IP packets of that data frame.

S802: If a quantity of an IP packet with transmission error in the plurality of IP packets is greater than or equal to a quantity threshold, lowering a priority of a logical channel corresponding to a DRB entity that carries a remaining IP in the plurality of IP packets, to prioritize a data transmission of other logical channels.

In the present embodiment, the communication device determines whether there is the IP packet with transmission error in the plurality of IP packets at the MAC layer. If there is the IP packet with transmission error in the plurality of IP packets and the quantity of the IP packet with transmission error is greater than or equal to the quantity threshold, it is indicated that the data frame to which the plurality of IP packets belong cannot be correctly parsed due to the influence of IP packet transmission error. At this time, if there is still remaining IP packet that has not been transmitted in the plurality of IP packets, the MAC layer with a priority processing function on logical channels can be utilized to lower the priority of the logical channel corresponding to the DRB entity carrying the remaining IP packet at the MAC layer, to prioritize the data transmission of other logical channels, thereby improving the efficiency of air interface resources.

In the embodiment of the present disclosure, at the MAC layer, if the quantity of the IP packet with transmission error in the plurality of IP packets belonging to the same data frame is greater than or equal to the quantity threshold, the communication device lowers the priority of the logical channel corresponding to the DRB entity carrying the remaining IP packet that has not been transmitted in the plurality of IPs, so as to avoid the remaining IP packet of the data frame that has not been transmitted occupying air interface resources and delaying the transmission of other data frames in the case that the data frame cannot be correctly parsed due to the IP packet transmission error, and to improve the efficiency of air interface resources.

Taking IP packets 1-3 as multiple IP packets belonging to a same data frame as an example, a transmission process of IP packets by the communication device at the MAC layer is as follows.
Step 1): after arriving at the PDCP layer, the IP packets 1-3 are passed from the PDCP layer to the RLC layer, the RLC PDU is formed on a logical channel 1, and the communication device then passes the RLC PDU to the MAC layer.
Step 2): after obtaining air interface resources, the communication device organizes an IP packet 1 to a MAC PDU for transmission at the MAC layer, where the MAC PDU including the IP packet 1 is transmitted incorrectly.
Step 3): the communication device lowers a priority of logical channel 1 at the MAC layer to prioritize data transmission of other logical channels.

Referring to FIG. 9, FIG. 9 is a schematic flowchart of a data transmission method provided by an embodiment of the present disclosure. As shown in FIG. 9, the method of the present embodiment may include the following steps.

S901: determining, at a MAC layer, a plurality of IP packets belonging to a same data frame.

Reference for implementation principles and technical effects of S901 can be made to the aforementioned embodiments and details will not be repeated here.

S902: if a quantity of an IP packet with transmission error in the plurality of IP packets is greater than or equal to a quantity threshold, discarding an RLC PDU including a remaining IP packet in a received RLC PDU.

In the present embodiment, a communication device determines whether there is the IP packet with transmission error in the plurality of IP packets at the MAC layer. If there is the IP packet with transmission error in the plurality of IP packets and the quantity of the IP packet with transmission error is greater than or equal to the quantity threshold, it is indicated that the data frame to which the plurality of IP packets belong cannot be correctly parsed due to the influence of IP packet transmission error. At this time, if there is still remaining IP packet that has not been transmitted in the plurality of IP packets, the communication device may discard the RLC PDU including the remaining IP packet. On the one hand, the remaining IP can be avoided from continuing to occupy air interface resources, so that other subsequent data frames can obtain air interface resources more quickly and the air interface resource efficiency can be improved. On the other hand, due to an active discarding of the remaining IP in the data frame, the communication device can timely obtain feedback information about data frame loss, and then detect timely whether a startup of survival time is required. On the other hand, the actively discarding of the remaining IP packet in the data frame is beneficial for quickly triggering TCP/IP slow start and TCP/IP retransmission.

In the embodiment of the present disclosure, in the MAC layer, if the quantity of the IP packet with transmission error in the plurality of IP packets belonging to the same data frame is greater than or equal to the quantity threshold, the RLC SDU of the remaining IP packet that has not been transmitted in the plurality of IPs is discarded, so as to improve the efficiency of air interface resources and facilitate timely triggering the survival time, TCP/IP slow start, and TCP/IP retransmission.

Taking IP packets 1-3 as multiple IP packets belonging to a same data frame as an example, a transmission process of IP packets by the communication device at the MAC layer is as follows.
Step 1): after arriving at the PDCP layer, the IP packets 1-3 are passed from the PDCP layer to the RLC layer, the RLC PDU is formed on a logical channel 1, and the communication device then passes the RLC PDU to the MAC layer.
Step 2): after obtaining air interface resources, the communication device organizes an IP packet 1 to a MAC PDU for transmission at the MAC layer, where the MAC PDU including the IP packet 1 is transmitted incorrectly.
Step 3): the communication device deletes the RLC PDU including IP packets at the MAC layer.

Based on the embodiments shown in FIG. 8 and FIG. 9, in some embodiments, at the MAC layer, the communication device may determine the IP packet with transmission error in the plurality of IP packets based on a HARQ of a physical layer and/or feedback information indicating that a retransmission is still unsuccessful, thereby improving the accuracy of determining the IP packet with transmission error. Specifically, when receiving a HARQ from the physical layer about an IP packet at the MAC layer and/or feedback information from an opposite end indicating that a retransmission of an IP packet is still unsuccessful, the communication device determines that the IP packet has been transmitted incorrectly.

In some embodiments, when the communication device is a terminal, i.e. when the embodiments of the present disclosure are applied to the terminal, the terminal may receive configuration information from a network device, where the configuration information includes at least one of the following: whether to allow stopping a transmission of an IP packet at the user plane air interface protocol layer, or whether to allow lowering a transmission priority of an IP packet at the user plane air interface protocol layer, or a manner of determining an IP packet transmission error, or the quantity threshold.

Furthermore, when the user plane air interface protocol layer is the PDCP layer, the configuration information received by the terminal from the network device includes at least one of the following: whether to allow an adjustment of a transmission order of IP packets at the PDCP layer, whether to allow discarding IP packets at the PDCP layer, or a manner of determining an IP packet transmission error at the PDCP layer, or the quantity threshold.

Furthermore, when the user plane air interface protocol layer is the MAC layer, the configuration information received by the terminal from the network device includes at least one of the following: whether to allow lowering a priority of a logical channel corresponding to a DRB to which an IP packet belongs at the MAC layer, whether to allow discarding an IP packet at the MAC layer, or a manner of determining an IP packet transmission error in the PDCP layer, or the quantity threshold.

The terminal can use corresponding embodiments above for data transmission based on the above configuration information.

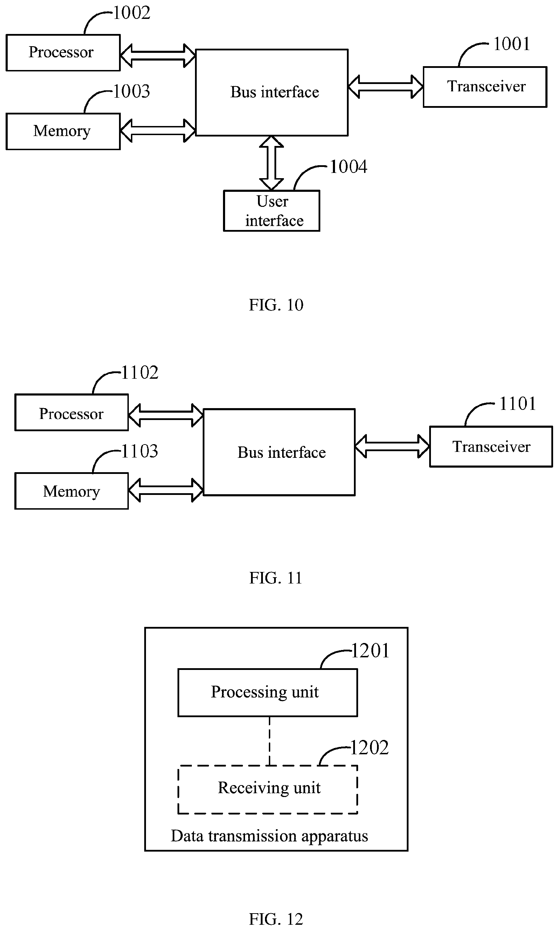

On a terminal side, an embodiment of the present disclosure provides a data transmission apparatus, which may be a terminal. As shown in FIG. 10, the data transmission apparatus may include a transceiver 1001, a processor 1002, and a memory 1003.

The transceiver 1001 is configured to transceive data under control of the processor 1002.

In FIG. 10, a bus architecture may include any number of interconnected buses and bridges, and specifically, various circuits of one or more processors represented by the processor 1002 and a memory represented by the memory 1003 are linked together. The bus architecture may also link various other circuits, such as a peripheral device, a voltage regulator, a power management circuit and the like, which are well known in the art and will thus not be further described here. A bus interface provides an interface. The transceiver 1001 may be multiple elements, including a transmitter and a receiver, and provide a unit for communication with various other apparatuses on transmission media. These transmission media include, these transmission media include a wireless channel, a wired channel, an optical cable and other transmission media. In some optional implementations, the data transmission apparatus further includes a user interface 1004. For different user devices, the user interface 1004 may also be an interface that can connect externally/internally to a required device, and the connected device includes, but is not limited to, a keyboard, a display, a speaker, a microphones, a joystick, etc.

The processor 1002 is responsible for managing the bus architecture and general processing, and the memory 1003 can store data used by the processor 1002 when executing operations.

In some optional implementations, the processor 1002 may be a central processing unit (central processing unit, CPU), an application specific integrated circuit (Application Specific Integrated Circuit, ASIC), a field-programmable gate array (Field-Programmable Gate Array, FPGA), or a complex programmable logic device (Complex Programmable Logic Device, CPLD), and the processor 1002 may also adopt a multi-core architecture.

By calling a computer program stored in the memory 1003, the processor 1002 is configured to execute any of the methods related to the terminal provided by the embodiments of the present disclosure in accordance with obtained executable instructions. The processor and the memory may also be physically separated.

Specifically, the processor 1002 is configured to execute the following operations: determining, at a user plane air interface protocol layer, a plurality of IP packets belonging to a same data frame; if a quantity of an IP packet with transmission error in the plurality of IP packets is greater than or equal to a quantity threshold, at the user plane air interface protocol layer, stopping a transmission of a remaining IP packet in the plurality of IP packets, or lowering a transmission priority of the remaining IP packet to prioritize a transmission of other data frames on a QoS flow where the data frame is located or prioritize a transmission of a data frame on other QoS flows.

In some optional implementations, the user plane air interface protocol layer is a PDCP layer; the processor 1002 further executes the following operations: discarding, on a PDCP entity carrying the remaining IP packet, a PDCP SDU including the remaining IP packet; or, adjusting, on the PDCP entity carrying the remaining IP packet, the PDCP SDU including the remaining IP packet such that the PDCP SDU including the remaining IP packet is to be transmitted after other PDCP SDUs.

In some optional implementations, the processor 1002 further executes the following operations: adjusting, on the PDCP entity carrying the remaining IP packet, the PDCP SDU including the remaining IP packet such that the PDCP SDU including the remaining IP packet is to be transmitted after other PDCP SDUs.

In some optional implementations, the processor 1002 further executes at least one of the following operations: for a data frame belonging to a periodic service, if there is, in a service period, only one data frame for the periodic service, determining IP packets included in all PDCP SDUs within a same service period as the plurality of IP packets belonging to the same data frame; or, among IP packets included in multiple PDCP SDUs, determining IP packets carrying a same data frame label as the plurality of IP packets belonging to the same data frame; or, among IP packets included in multiple PDCP SDUs, determining the plurality of IP packets belonging to the same data frame by performing deep packet parsing of the IP packets; or, among IP packets included in multiple PDCP SDUs, determining IP packets included in PDCP SDUs carrying a same group identifier as the plurality of IP packets belonging to the same data frame, where a group identifier carried by a PDCP SDU is from an SDAP layer.

In some optional implementations, the user plane air interface protocol layer is a MAC; the processor 1002 further executes the following operations: discarding an RLC PDU including the remaining IP packet in a received RLC PDU; or, lowering a priority of a logical channel corresponding to a DRB entity that carries the remaining IP packet, to prioritize a data transmission of other logical channels.

In some optional implementations, the processor 1002 further executes the following operations: at the MAC layer, determining the IP packet with transmission error in the plurality of IP packets based on a HARQ of a physical layer and/or feedback information indicating that a retransmission is still unsuccessful.

In some optional implementations, the processor 1002 further executes at least one of the following operations: among IP packets included in multiple MAC SDUs, determining IP packets included in MAC SDUs carrying a same group identifier as the plurality of IP packets belonging to the same data frame, where a group identifier carried by a MAC SDU is from an SDAP layer, a PDCP layer, or an RLC layer; or, among IP packets included in multiple MAC SDUs, determining IP packets transmitted on a same sub logical channel as the plurality of IP packets belonging to the same data frame, where in an RLC layer, PDCP PDUs including IP packets of different data frames are mapped to different sub logical channels, and PDCP PDUs including IP packets of a same data frame are mapped to a same sub logical channel.

In some optional implementations, the quantity threshold is equal to 1, or the quantity threshold is pre-configured by a network device for the terminal for each DRB or each QoS flow, or the quantity threshold is specified by a protocol

In some optional implementations, the processor 1002 further executes the following operations: receiving configuration information from a network device, where the configuration information includes at least one of the following: whether to allow stopping a transmission of an IP packet at the user plane air interface protocol layer, or whether to allow lowering a transmission priority of an IP packet at the user plane air interface protocol layer, or a manner of determining an IP packet transmission error, or the quantity threshold.

It should be noted here that the above apparatus provided by the present disclosure can implement all the method steps implemented by the terminal in the above method embodiments, and can achieve the same technical effects. The part of this embodiment which is same as the method embodiments and the beneficial effects will not be described in detail here.

On a network side, an embodiment of the present disclosure provides a timer processing apparatus, which may be a network device. As shown in FIG. 11, a communication apparatus includes: a transceiver 1101, a processor 1102, and a memory 1103.

The transceiver 1101 is configured to transceive data under control of the processor 1102.

In FIG. 11, a bus architecture may include any number of interconnected buses and bridges, and specifically, various circuits of one or more processors represented by the processor 1102 and a memory represented by the memory 1103 are linked together. The bus architecture may also link various other circuits, such as a peripheral device, a voltage regulator, a power management circuit and the like, which are well known in the art and will thus not be further described here. A bus interface provides an interface. The transceiver 1101 may be multiple elements, including a transmitter and a receiver, and provide a unit for communication with various other apparatuses on transmission media. These transmission media include a wireless channel, a wired channel, an optical cable and other transmission media. The processor 1102 is responsible for managing the bus architecture and general processing, and the memory 1103 can store data used by the processor 1002 when executing operations.

The processor 1102 may be a CPU, an ASIC, a FPGA or a CPLD, and the processor may also adopt a multi-core architecture.

By calling a computer program stored in the memory 1103, the processor 1102 is configured to execute any of the methods related to the network device provided by the embodiments of the present disclosure in accordance with obtained executable instructions. The processor and the memory may also be physically separated.

Specifically, the processor 1102 is configured to execute the following operations: determining, at a user plane air interface protocol layer, a plurality of IP packets belonging to a same data frame; if a quantity of an IP packet with transmission error in the plurality of IP packets is greater than or equal to a quantity threshold, at the user plane air interface protocol layer, stopping a transmission of a remaining IP packet in the plurality of IP packets, or lowering a transmission priority of the remaining IP packet to prioritize a transmission of other data frames on a QoS flow where the data frame is located or prioritize a transmission of a data frame on other QoS flows.

In some optional implementations, the user plane air interface protocol layer is a PDCP layer, and the processor 1102 further executes the following operations: discarding, on a PDCP entity carrying the remaining IP packet, a PDCP SDU including the remaining IP packet; or, adjusting, on the PDCP entity carrying the remaining IP packet, the PDCP SDU including the remaining IP packet such that the PDCP SDU including the remaining IP packet is to be transmitted after other PDCP SDUs.

In some optional implementations, the processor 1102 further executes the following operations: adjusting, on the PDCP entity carrying the remaining IP packet, the PDCP SDU including the remaining IP packet such that the PDCP SDU including the remaining IP packet is to be transmitted after other PDCP SDUs.

In some optional implementations, the processor 1102 further executes at least one of the following operations: for a data frame belonging to a periodic service, if there is, in a service period, only one data frame for the periodic service, determining IP packets included in all PDCP SDUs within a same service period as the plurality of IP packets belonging to the same data frame; or, among IP packets included in multiple PDCP SDUs, determining IP packets carrying a same data frame label as the plurality of IP packets belonging to the same data frame; or, among IP packets included in multiple PDCP SDUs, determining the plurality of IP packets belonging to the same data frame by performing deep packet parsing of the IP packets; or, among IP packets included in multiple PDCP SDUs, determining IP packets included in PDCP SDUs carrying a same group identifier as the plurality of IP packets belonging to the same data frame, where a group identifier carried by a PDCP SDU is from an SDAP layer.

In some optional implementations, the user plane air interface protocol layer is a MAC; the processor 1102 further executes the following operations: discarding an RLC PDU including the remaining IP packet in a received RLC PDU; or, lowering a priority of a logical channel corresponding to a DRB entity that carries the remaining IP packet, to prioritize a data transmission of other logical channels.

In some optional implementations, the processor 1102 further executes the following operations: at the MAC layer, determining the IP packet with transmission error in the plurality of IP packets based on a HARQ of a physical layer and/or feedback information indicating that a retransmission is still unsuccessful.

In some optional implementations, the processor 1102 further executes at least one of the following operations: among IP packets included in multiple MAC SDUs, determining IP packets included in MAC SDUs carrying a same group identifier as the plurality of IP packets belonging to the same data frame, where a group identifier carried by a MAC SDU is from an SDAP layer, a PDCP layer, or an RLC layer; or, among IP packets included in multiple MAC SDUs, determining IP packets transmitted on a same sub logical channel as the plurality of IP packets belonging to the same data frame, where in an RLC layer, PDCP PDUs including IP packets of different data frames are mapped to different sub logical channels, and PDCP PDUs including IP packets of a same data frame are mapped to a same sub logical channel.

In some optional implementations, the quantity threshold is equal to 1, or the quantity threshold is pre-configured by the network device for each DRB or each QoS flow, or the quantity threshold is specified by a protocol.

In some optional implementations, the processor 1102 further executes the following operations: sending configuration information to a terminal, where the configuration information includes at least one of the following: whether to allow stopping a transmission of an IP packet at the user plane air interface protocol layer, or whether to allow lowering a transmission priority of an IP packet at the user plane air interface protocol layer, or a manner of determining an IP packet transmission error, or the quantity threshold.

It should be noted here that the above apparatus provided by the present disclosure can implement all the method steps implemented by the network device in the above method embodiments, and can achieve the same technical effects. The part of this embodiment which is same as the method embodiments and the beneficial effects will not be described in detail here.

On the terminal side, an embodiment of the present disclosure provides a data transmission apparatus, which may be a terminal. As shown in FIG. 12, the data transmission apparatus includes a processing unit 1201.

The processing unit 1201 is configured to: determine, at a user plane air interface protocol layer, a plurality of IP packets belonging to a same data frame; if a quantity of an IP packet with transmission error in the plurality of IP packets is greater than or equal to a quantity threshold, at the user plane air interface protocol layer, stop a transmission of a remaining IP packet in the plurality of IP packets, or lower a transmission priority of the remaining IP packet to prioritize a transmission of other data frames on a QoS flow where the data frame is located or prioritize a transmission of a data frame on other QoS flows.

In some optional implementations, the user plane air interface protocol layer is a PDCP layer; the processing unit 1201 is further configured to: discard, on a PDCP entity carrying the remaining IP packet, a PDCP SDU including the remaining IP packet; or, adjust, on the PDCP entity carrying the remaining IP packet, the PDCP SDU including the remaining IP packet such that the PDCP SDU including the remaining IP packet is to be transmitted after other PDCPSDUs.

In some optional implementations, the processing unit 1201 is further configured to: adjust, on the PDCP entity carrying the remaining IP packet, the PDCP SDU including the remaining IP packet such that the PDCP SDU including the remaining IP packet is to be transmitted after other PDCP SDUs.

In some optional implementations, the processing unit 1201 is further configured to execute at least one of the following operations: for a data frame belonging to a periodic service, if there is, in a service period, only one data frame for the periodic service, determining IP packets included in all PDCP SDUs within a same service period as the plurality of IP packets belonging to the same data frame; or, among IP packets included in multiple PDCP SDUs, determining IP packets carrying a same data frame label as the plurality of IP packets belonging to the same data frame; or, among IP packets included in multiple PDCP SDUs, determining the plurality of IP packets belonging to the same data frame by performing deep packet parsing of the IP packets; or, among IP packets included in multiple PDCP SDUs, determining IP packets included in PDCP SDUs carrying a same group identifier as the plurality of IP packets belonging to the same data frame, where a group identifier carried by a PDCP SDU is from an SDAP layer.

In some optional implementations, the user plane air interface protocol layer is a MAC; the processing unit 1201 is further configured to: discard an RLC PDU including the remaining IP packet in a received RLC PDU; or, lower a priority of a logical channel corresponding to a DRB entity that carries the remaining IP packet, to prioritize a data transmission of other logical channels.

In some optional implementations, the processing unit 1201 is further configured to: at the MAC layer, determine the IP packet with transmission error in the plurality of IP packets based on a HARQ of a physical layer and/or feedback information indicating that a retransmission is still unsuccessful.

In some optional implementations, the processing unit 1201 is further configured to execute at least one of the following operations: among IP packets included in multiple MAC SDUs, determining IP packets included in MAC SDUs carrying a same group identifier as the plurality of IP packets belonging to the same data frame, where a group identifier carried by a MAC SDU is from an SDAP layer, a PDCP layer, or an RLC layer; or, among IP packets included in multiple MAC SDUs, determining IP packets transmitted on a same sub logical channel as the plurality of IP packets belonging to the same data frame, where in an RLC layer, PDCP PDUs including IP packets of different data frames are mapped to different sub logical channels, and PDCP PDUs including IP packets of a same data frame are mapped to a same sub logical channel.

In some optional implementations, the quantity threshold is equal to 1, or the quantity threshold is pre-configured by a network device for the terminal for each DRB or each QoS flow, or the quantity threshold is specified by a protocol.

In some optional implementations, the data transmission apparatus further includes: a receiving unit 1202, configured to receive configuration information from a network device, where the configuration information includes at least one of the following: whether to allow stopping a transmission of an IP packet at the user plane air interface protocol layer, or whether to allow lowering a transmission priority of an IP packet at the user plane air interface protocol layer, or a manner of determining an IP packet transmission error, or the quantity threshold.

It should be noted here that the above apparatus provided by the present disclosure can implement all the method steps implemented by the terminal in the above method embodiments, and can achieve the same technical effects. The part of this embodiment which is same as the method embodiments and the beneficial effects will not be described in detail here.

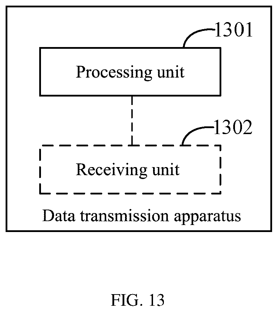

On the network side, an embodiment of the present disclosure further provides a data transmission apparatus, which may be a network device. As shown in FIG. 13, the data transmission apparatus includes a processing unit 1301.

The processing unit 1301 is configured to: determine, at a user plane air interface protocol layer, a plurality of IP packets belonging to a same data frame; if a quantity of an IP packet with transmission error in the plurality of IP packets is greater than or equal to a quantity threshold, at the user plane air interface protocol layer, stop a transmission of a remaining IP packet in the plurality of IP packets, or lower a transmission priority of the remaining IP packet to prioritize a transmission of other data frames on a QoS flow where the data frame is located or prioritize a transmission of a data frame on other QoS flows.

In some optional implementations, the user plane air interface protocol layer is a PDCP layer; the processing unit 1301 is further configured to: discard, on a PDCP entity carrying the remaining IP packet, a PDCP SDU including the remaining IP packet; or, adjust, on the PDCP entity carrying the remaining IP packet, the PDCP SDU including the remaining IP packet such that the PDCP SDU including the remaining IP packet is to be transmitted after other PDCP SDUs.

In some optional implementations, the processing unit 1301 is further configured to: adjust, on the PDCP entity carrying the remaining IP packet, the PDCP SDU including the remaining IP packet such that the PDCP SDU including the remaining IP packet is to be transmitted after other PDCP SDUs.

In some optional implementations, the processing unit 1301 is further configured to execute at least one of the following operations: for a data frame belonging to a periodic service, if there is, in a service period, only one data frame for the periodic service, determining IP packets included in all PDCP SDUs within a same service period as the plurality of IP packets belonging to the same data frame; or, among IP packets included in multiple PDCP SDUs, determining IP packets carrying a same data frame label as the plurality of IP packets belonging to the same data frame; or, among IP packets included in multiple PDCP SDUs, determining the plurality of IP packets belonging to the same data frame by performing deep packet parsing of the IP packets; or, among IP packets included in multiple PDCP SDUs, determining IP packets included in PDCP SDUs carrying a same group identifier as the plurality of IP packets belonging to the same data frame, where a group identifier carried by a PDCP SDU is from an SDAP layer.

In some optional implementations, the user plane air interface protocol layer is a MAC; the processing unit 1301 is further configured to: discard an RLC PDU including the remaining IP packet in a received RLC PDU; or, lower a priority of a logical channel corresponding to a DRB entity that carries the remaining IP packet, to prioritize a data transmission of other logical channels.

In some optional implementations, the processing unit 1301 is further configured to: at a MAC layer, determine the IP packet with transmission error in the plurality of IP packets based on a HARQ of a physical layer and/or feedback information indicating that a retransmission is still unsuccessful.

In some optional implementations, the processing unit 1301 is further configured to execute at least one of the following operations: among IP packets included in multiple MAC SDUs, determining IP packets included in MAC SDUs carrying a same group identifier as the plurality of IP packets belonging to the same data frame, where a group identifier carried by a MAC SDU is from an SDAP layer, a PDCP layer, or an RLC layer; or, among IP packets included in multiple MAC SDUs, determining IP packets transmitted on a same sub logical channel as the plurality of IP packets belonging to the same data frame, where in an RLC layer, PDCP PDUs including IP packets of different data frames are mapped to different sub logical channels, and PDCP PDUs including IP packets of a same data frame are mapped to a same sub logical channel.

In some optional implementations, the quantity threshold is equal to 1, or the quantity threshold is pre-configured by the network device for each DRB or each QoS flow, or the quantity threshold is specified by a protocol.

In some optional implementations, the data transmission apparatus further includes: a sending unit 1302, configured to send configuration information to a terminal, where the configuration information includes at least one of the following: whether to allow stopping a transmission of an IP packet at the user plane air interface protocol layer, or whether to allow lowering a transmission priority of an IP packet at the user plane air interface protocol layer, or a manner of determining an IP packet transmission error, or the quantity threshold.

It should be noted here that the above apparatus provided by the present disclosure can implement all the method steps implemented by the network device in the above method embodiments, and can achieve the same technical effects. The part of this embodiment which is same as the method embodiments and the beneficial effects will not be described in detail here.

It should be noted that a division of units in the embodiments of the present disclosure is schematic and is only a logical function division, and there may be other division manners in actual implementation. In addition, the functional units in the embodiments of the present disclosure may be integrated in one processing unit, or each unit may exist physically alone, or two or more units may be integrated in one unit. The above-mentioned integrated unit may be implemented in a form of hardware or a software functional unit.

If implemented in the form of the software functional unit and sold or used as an independent product, the integrated unit may be stored in a processor-readable storage medium. Based on this understanding, a technical solution of the present disclosure essentially or a part thereof that contributes to the prior art or all or part of the technical solution can be embodied in a form of a software product. The computer software product is stored in a storage medium and includes several instructions for making a computer device (which may be a personal computer, a server, or a network device, etc.) or a processor (processor) execute all or part of steps of the methods described in the embodiments of the present disclosure. The aforementioned storage medium includes: a USB flash disk, a mobile hard disk, a read-only memory (Read-Only Memory, ROM), a random access memory (Random Access Memory, RAM), a magnetic disk, an optical disk or other media that can store program codes.

On the terminal side, an embodiment of the present disclosure provides a processor-readable storage medium, where the processor-readable storage medium stores a computer program, and the computer program is used to cause a processor to execute any of the methods related to the terminal provided by the embodiments of the present disclosure, and enable the processor to implement all the method steps implemented by the terminal in the above method embodiments, and achieve the same technical effects. The part of this embodiment which is same as the method embodiments and the beneficial effects will not be described in detail here.

On the network side, an embodiment of the present disclosure provides a processor-readable storage medium, where the processor-readable storage medium stores a computer program, and the computer program is used to cause a processor to execute any of the methods related to the network device provided by the embodiments of the present disclosure, and enable the processor to implement all the method steps implemented by the network device in the above method embodiments, and achieve the same technical effects. The part of this embodiment which is same as the method embodiments and the beneficial effects will not be described in detail here.

The processor-readable storage medium may be any available medium or data storage device that the processor can access, including but not limited to, a magnetic memory (such as a floppy disk, a hard disk, a magnetic tape, a magneto-optical disk (MO), etc.), an optical memory (such as a CD, a DVD, a BD, a HVD, etc.), and a semiconductor memory (such as a ROM, an EPROM, an EEPROM, a non-volatile memory (NAND FLASH), a solid state disk (SSD)), etc.

It should be understood by those skilled in the art that the embodiments of the present disclosure can be provided as methods, systems or computer program products. Therefore, the present disclosure may take forms of entire-hardware embodiments, entire-software embodiments, or embodiments combining software and hardware aspects. Furthermore, the present disclosure may take a form of a computer program product implemented on one or more computer-usable storage media (including but not limited to a magnetic disk storage, an optical storage, etc.) in which computer-usable program codes are included.

The present disclosure is described with reference to flowcharts and/or block diagrams of methods, apparatuses and computer program products according to the embodiments of the present disclosure. It should be understood that each flow and/or block in the flowcharts and/or block diagrams, and a combination of flows and/or blocks in the flowcharts and/or block diagrams may be implemented by computer-executable instructions. These computer-executable instructions may be provided to a processor of a general-purpose computer, a special-purpose computer, an embedded processor or other programmable data processing devices to produce a machine, so that an apparatus for implementing functions specified in one or more flows of the flowcharts and/or one or more blocks of the block diagrams is produced by instructions executed by the processor of the computer or other programmable data processing devices.

These processor-executable instructions may also be stored in a processor-readable memory that can guide a computer or other programmable data processing devices to work in a specific way, so that the instructions stored in the processor-readable memory produce a manufactured product including an instruction apparatus, and the instruction apparatus implements functions specified in one or more flows of the flowcharts and/or one or more blocks of the block diagrams.

These processor-executable instructions may also be loaded on a computer or other programmable data processing devices, so that a series of operation steps are executed on the computer or other programmable devices to produce computer-implemented processing, whereby the instructions executed on the computer or other programmable devices provide steps for implementing functions specified in one or more flows of the flowcharts and/or one or more blocks of the block diagrams.

Obviously, those skilled in the art can make various modifications and variations to the present disclosure without departing from the spirit and scope of the present disclosure. Thus, if these modifications and variations of the present disclosure are within the scope of claims of the present disclosure and their equivalent technology, the present disclosure is also intended to include these modifications and variations.

## Claims

1. A data transmission method, **characterized in that** the method is applied to a terminal, and the method comprises:
determining, at a user plane air interface protocol layer, a plurality of IP packets belonging to a same data frame;
if a quantity of an IP packet with transmission error in the plurality of IP packets is greater than or equal to a quantity threshold, at the user plane air interface protocol layer, stopping a transmission of a remaining IP packet in the plurality of IP packets, or lowering a transmission priority of the remaining IP packet to prioritize a transmission of other data frames on a quality of service QoS flow where the data frame is located or prioritize a transmission of a data frame on other QoS flows.

2. The data transmission method according to claim 1, wherein the user plane air interface protocol layer is a packet data convergence protocol PDCP layer;
at the user plane air interface protocol layer, stopping the transmission of the remaining IP packet in the plurality of IP packets comprises:
discarding, on a PDCP entity carrying the remaining IP packet, a PDCP service data unit SDU comprising the remaining IP packet;
at the user plane air interface protocol layer, lowering the transmission priority of the remaining IP packet comprises:
adjusting, on the PDCP entity carrying the remaining IP packet, the PDCP SDU comprising the remaining IP packet such that the PDCP SDU comprising the remaining IP packet is to be transmitted after other PDCP SDUs.

3. The data transmission method according to claim 2, wherein before stopping the transmission of the remaining IP packet in the plurality of IP packets, or lowering the transmission priority of the remaining IP packet, the data transmission method further comprises:
at the PDCP layer, determining the IP packet with transmission error in the plurality of IP packets based on an automatic repeat-request ARQ of a radio link control RLC layer and/or a hybrid automatic repeat request HARQ of a physical layer.

4. The data transmission method according to claim 2, wherein determining, at the user plane air interface protocol layer, the plurality of IP packets belonging to the same data frame comprises at least one of the following:
for a data frame belonging to a periodic service, if there is, in a service period, only one data frame for the periodic service, determining IP packets comprised in all PDCP SDUs within a same service period as the plurality of IP packets belonging to the same data frame; or,
among IP packets comprised in multiple PDCP SDUs, determining IP packets carrying a same data frame label as the plurality of IP packets belonging to the same data frame; or,
among IP packets comprised in multiple PDCP SDUs, determining the plurality of IP packets belonging to the same data frame by performing deep packet parsing of the IP packets; or,
among IP packets comprised in multiple PDCP SDUs, determining IP packets comprised in PDCP SDUs carrying a same group identifier as the plurality of IP packets belonging to the same data frame, wherein a group identifier carried by a PDCP SDU is from a service data adaptation protocol SDAP layer.

5. The data transmission method according to claim 1, wherein the user plane air interface protocol layer is a media access control MAC layer;
at the user plane air interface protocol layer, stopping the transmission of the remaining IP packet in the plurality of IP packets comprises:
discarding an RLC protocol data unit PDU comprising the remaining IP packet in a received RLC PDU;
at the user plane air interface protocol layer, lowering the transmission priority of the remaining IP packet comprises:
lowering a priority of a logical channel corresponding to a data radio bearer DRB entity that carries the remaining IP packet, to prioritize a data transmission of other logical channels.

6. The data transmission method according to claim 5, wherein before stopping the transmission of the remaining IP packet in the plurality of IP packets, or lowering the transmission priority of the remaining IP packet, the data transmission method further comprises:
at the MAC layer, determining the IP packet with transmission error in the plurality of IP packets based on a HARQ of a physical layer and/or feedback information indicating that a retransmission is still unsuccessful.

7. The data transmission method according to claim 5, wherein determining, at the user plane air interface protocol layer, the plurality of IP packets belonging to the same data frame comprises at least one of the following:
among IP packets comprised in multiple MAC SDUs, determining IP packets comprised in MAC SDUs carrying a same group identifier as the plurality of IP packets belonging to the same data frame, wherein a group identifier carried by a MAC SDU is from an SDAP layer, a PDCP layer, or an RLC layer; or,
among IP packets comprised in multiple MAC SDUs, determining IP packets transmitted on a same sub logical channel as the plurality of IP packets belonging to the same data frame, wherein in an RLC layer, PDCP PDUs comprising IP packets of different data frames are mapped to different sub logical channels, and PDCP PDUs comprising IP packets of a same data frame are mapped to a same sub logical channel.

8. The data transmission method according to any one of claims 1-7, wherein the quantity threshold is equal to 1, or the quantity threshold is pre-configured by a network device for the terminal for each DRB or each QoS flow, or the quantity threshold is specified by a protocol.

9. The data transmission method according to any one of claims 1-7, wherein the data transmission method further comprises:
receiving configuration information from a network device;
wherein the configuration information comprises at least one of the following: whether to allow stopping a transmission of an IP packet at the user plane air interface protocol layer, or whether to allow lowering a transmission priority of an IP packet at the user plane air interface protocol layer, or a manner of determining an IP packet transmission error, or the quantity threshold.

10. A data transmission method, **characterized in that** the method is applied to a network device, and the method comprises:
determining, at a user plane air interface protocol layer, a plurality of IP packets belonging to a same data frame;
if a quantity of an IP packet with transmission error in the plurality of IP packets is greater than or equal to a quantity threshold, at the user plane air interface protocol layer, stopping a transmission of a remaining IP packet in the plurality of IP packets, or lowering a transmission priority of the remaining IP packet to prioritize a transmission of other data frames on a QoS flow where the data frame is located or prioritize a transmission of a data frame on other QoS flows.

11. The data transmission method according to claim 10, wherein the user plane air interface protocol layer is a PDCP layer;
at the user plane air interface protocol layer, stopping the transmission of the remaining IP packet in the plurality of IP packets comprises:
discarding, on a PDCP entity carrying the remaining IP packet, a PDCP SDU comprising the remaining IP packet;
at the user plane air interface protocol layer, lowering the transmission priority of the remaining IP packet comprises:
adjusting, on the PDCP entity carrying the remaining IP packet, the PDCP SDU comprising the remaining IP packet such that the PDCP SDU comprising the remaining IP packet is to be transmitted after other PDCP SDUs.

12. The data transmission method according to claim 11, wherein before stopping the transmission of the remaining IP packet in the plurality of IP packets, or lowering the transmission priority of the remaining IP packet, the data transmission method further comprises:
at the PDCP layer, determining the IP packet with transmission error in the plurality of IP packets based on an ARQ of an RLC layer and/or a HARQ of a physical layer.

13. The data transmission method according to claim 11, wherein determining, at the user plane air interface protocol layer, the plurality of IP packets belonging to the same data frame comprises at least one of the following:
for a data frame belonging to a periodic service, if there is, in a service period, only one data frame for the periodic service, determining IP packets comprised in all PDCP SDUs within a same service period as the plurality of IP packets belonging to the same data frame; or,
among IP packets comprised in multiple PDCP SDUs, determining IP packets carrying a same data frame label as the plurality of IP packets belonging to the same data frame; or,
among IP packets comprised in multiple PDCP SDUs, determining the plurality of IP packets belonging to the same data frame by performing deep packet parsing of the IP packets; or,
among IP packets comprised in multiple PDCP SDUs, determining IP packets comprised in PDCP SDUs carrying a same group identifier as the plurality of IP packets belonging to the same data frame, wherein a group identifier carried by a PDCP SDU is from an SDAP layer.

14. The data transmission method according to claim 10, wherein the user plane air interface protocol layer is a MAC;
at the user plane air interface protocol layer, stopping the transmission of the remaining IP packet in the plurality of IP packets comprises:
discarding an RLC PDU comprising the remaining IP packet in a received RLC PDU;
at the user plane air interface protocol layer, lowering the transmission priority of the remaining IP packet comprises:
lowering a priority of a logical channel corresponding to a DRB entity that carries the remaining IP packet, to prioritize a data transmission of other logical channels.

15. The data transmission method according to claim 14, wherein before stopping the transmission of the remaining IP packet in the plurality of IP packets, or lowering the transmission priority of the remaining IP packet, the data transmission method further comprises:
at the MAC layer, determining the IP packet with transmission error in the plurality of IP packets based on a HARQ of a physical layer and/or feedback information indicating that a retransmission is still unsuccessful.

16. The data transmission method according to claim 14, wherein determining, at the user plane air interface protocol layer, the plurality of IP packets belonging to the same data frame comprises at least one of the following:
among IP packets comprised in multiple MAC SDUs, determining IP packets comprised in MAC SDUs carrying a same group identifier as the plurality of IP packets belonging to the same data frame, wherein a group identifier carried by a MAC SDU is from an SDAP layer, a PDCP layer, or an RLC layer; or,
among IP packets comprised in multiple MAC SDUs, determining IP packets transmitted on a same sub logical channel as the plurality of IP packets belonging to the same data frame, wherein in an RLC layer, PDCP PDUs comprising IP packets of different data frames are mapped to different sub logical channels, and PDCP PDUs comprising IP packets of a same data frame are mapped to a same sub logical channel.

17. The data transmission method according to any one of claims 10-16, wherein the quantity threshold is equal to 1, or the quantity threshold is pre-configured by the network device for each DRB or each QoS flow, or the quantity threshold is specified by a protocol.

18. The data transmission method according to any one of claims 10-16, wherein the data transmission method further comprises:
sending configuration information to a terminal;
wherein the configuration information comprises at least one of the following: whether to allow stopping a transmission of an IP packet at the user plane air interface protocol layer, or whether to allow lowering a transmission priority of an IP packet at the user plane air interface protocol layer, or a manner of determining an IP packet transmission error, or the quantity threshold.

19. A data transmission apparatus, **characterized in that** the apparatus is applied to a terminal, and the data transmission apparatus comprises a memory, a transceiver, and a processor;
the memory is configured to store a computer program;
the transceiver is configured to transceive data under control of the processor;
the processor is configured to read the computer program in the memory and execute the following operations:
determining, at a user plane air interface protocol layer, a plurality of IP packets belonging to a same data frame;
if a quantity of an IP packet with transmission error in the plurality of IP packets is greater than or equal to a quantity threshold, at the user plane air interface protocol layer, stopping a transmission of a remaining IP packet in the plurality of IP packets, or lowering a transmission priority of the remaining IP packet to prioritize a transmission of other data frames on a QoS flow where the data frame is located or prioritize a transmission of a data frame on other QoS flows.

20. The data transmission apparatus according to claim 19, wherein the user plane air interface protocol layer is a PDCP layer;
the processor further executes the following operations:
discarding, on a PDCP entity carrying the remaining IP packet, a PDCP SDU comprising the remaining IP packet; or,
adjusting, on the PDCP entity carrying the remaining IP packet, the PDCP SDU comprising the remaining IP packet such that the PDCP SDU comprising the remaining IP packet is to be transmitted after other PDCP SDUs.

21. The data transmission apparatus according to claim 20, wherein the processor further executes the following operations:
at the PDCP layer, determining the IP packet with transmission error in the plurality of IP packets based on an ARQ of an RLC layer and/or a HARQ of a physical layer.

22. The data transmission apparatus according to claim 20, wherein the processor further executes at least one of the following operations:
for a data frame belonging to a periodic service, if there is, in a service period, only one data frame for the periodic service, determining IP packets comprised in all PDCP SDUs within a same service period as the plurality of IP packets belonging to the same data frame; or,
among IP packets comprised in multiple PDCP SDUs, determining IP packets carrying a same data frame label as the plurality of IP packets belonging to the same data frame; or,
among IP packets comprised in multiple PDCP SDUs, determining the plurality of IP packets belonging to the same data frame by performing deep packet parsing of the IP packets; or,
among IP packets comprised in multiple PDCP SDUs, determining IP packets comprised in PDCP SDUs carrying a same group identifier as the plurality of IP packets belonging to the same data frame, wherein a group identifier carried by a PDCP SDU is from an SDAP layer.

23. The data transmission apparatus according to claim 19, wherein the user plane air interface protocol layer is a MAC;
the processor further executes the following operations:
discarding an RLC protocol data unit PDU comprising the remaining IP packet in a received RLC PDU; or,
lowering a priority of a logical channel corresponding to a data radio bearer DRB entity that carries the remaining IP packet, to prioritize a data transmission of other logical channels.

24. The data transmission apparatus according to claim 23, wherein the processor further executes the following operations:
at the MAC layer, determining the IP packet with transmission error in the plurality of IP packets based on a HARQ of a physical layer and/or feedback information indicating that a retransmission is still unsuccessful.

25. The data transmission apparatus according to claim 23, wherein the processor further executes at least one of the following operations:
among IP packets comprised in multiple MAC SDUs, determining IP packets comprised in MAC SDUs carrying a same group identifier as the plurality of IP packets belonging to the same data frame, wherein a group identifier carried by a MAC SDU is from an SDAP layer, a PDCP layer, or an RLC layer; or,
among IP packets comprised in multiple MAC SDUs, determining IP packets transmitted on a same sub logical channel as the plurality of IP packets belonging to the same data frame, wherein in an RLC layer, PDCP PDUs comprising IP packets of different data frames are mapped to different sub logical channels, and PDCP PDUs comprising IP packets of a same data frame are mapped to a same sub logical channel.

26. The data transmission apparatus according to any one of claims 19-25, wherein the quantity threshold is equal to 1, or the quantity threshold is pre-configured by a network device for the terminal for each DRB or each QoS flow, or the quantity threshold is specified by a protocol.

27. The data transmission apparatus according to any one of claims 19-25, wherein the processor further executes the following operations:
receiving configuration information from a network device;
wherein the configuration information comprises at least one of the following: whether to allow stopping a transmission of an IP packet at the user plane air interface protocol layer, or whether to allow lowering a transmission priority of an IP packet at the user plane air interface protocol layer, or a manner of determining an IP packet transmission error, or the quantity threshold.

28. A data transmission apparatus, **characterized in that** the apparatus is applied to a network device, and the data transmission apparatus comprises a memory, a transceiver, and a processor;
the memory is configured to store a computer program;
the transceiver is configured to transceive data under control of the processor;
the processor is configured to read the computer program in the memory and execute the data transmission method according to any one of claims 10-18.

29. A data transmission apparatus, **characterized in that** the apparatus is applied to a terminal, and the apparatus comprises:
a processing unit, configured to determine, at a user plane air interface protocol layer, a plurality of IP packets belonging to a same data frame; if a quantity of an IP packet with transmission error in the plurality of IP packets is greater than or equal to a quantity threshold, at the user plane air interface protocol layer, stop a transmission of a remaining IP packet in the plurality of IP packets, or lower a transmission priority of the remaining IP packet to prioritize a transmission of other data frames on a QoS flow where the data frame is located or prioritize a transmission of a data frame on other QoS flows.

30. A data transmission apparatus, **characterized in that** the apparatus is applied to a network device, and the apparatus comprises:
a processing unit, configured to determine, at a user plane air interface protocol layer, a plurality of IP packets belonging to a same data frame; if a quantity of an IP packet with transmission error in the plurality of IP packets is greater than or equal to a quantity threshold, at the user plane air interface protocol layer, stop a transmission of a remaining IP packet in the plurality of IP packets, or lower a transmission priority of the remaining IP packet to prioritize a transmission of other data frames on a QoS flow where the data frame is located or prioritize a transmission of a data frame on other QoS flows.

31. A processor-readable storage medium, **characterized in that** the processor-readable storage medium stores a computer program, and the computer program is used to cause the processor to execute the data transmission method according to any one of claims 1-18.
